# EUROPEAN PATENT APPLICATION

(11) **EP 4 780 079 A1**
(43) Date of publication of application: **22.07.2026**
(21) Application number: 24876310.4
(22) Date of filing: 03.09.2024
(51) Int. Cl.: H04W 48/16

(54) **COMMUNICATION METHOD AND APPARATUS**

(30) Priority: 12.10.2023 CN 202311321745
(71) Applicant: HUAWEI TECHNOLOGIES CO., LTD., Shenzhen 518129 (CN)
(72) Inventor: YU, Youyang, Shenzhen, Guangdong 518129 (CN); WU, Wenfu, Shenzhen, Guangdong 518129 (CN)
(74) Representative: Pfenning, Meinig & Partner mbB
(86) International application number: PCT/CN2024/116636
(87) International publication number: WO 2025/077490

(57) **Abstract**

This application provides a communication method and an apparatus. The method includes: An SMF obtains first subscription data of a terminal device and a first identifier; and the SMF determines, based on the first subscription data, that the first identifier is allowed to access a network, and sends a first message to a server, where the first message includes an identifier of a first AMF and/or a temporary identifier of the terminal device. The server sends a first registration request message to the first AMF, where the first registration request message includes the first identifier and/or the temporary identifier. The first AMF receives the first registration request message from the server, where the first registration request message includes the first identifier and/or the temporary identifier of the terminal device; determines, based on the temporary identifier or a third identifier of the terminal device, first context information corresponding to the terminal device; and obtains location information of the terminal device from the first context information. According to this application, it can be ensured that a core network obtains location information of a user who logs in to a cloud phone account, and security of the cloud phone account is improved.

## Description

This application claims priority to Chinese Patent Application No. 202311321745.3, filed with the China National Intellectual Property Administration on October 12, 2023, and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

Currently, a 5th generation core network (5th generation core network, 5GC) mainly provides network connection services for to consumer (to consumer, toC) scenarios, initially focusing on supporting voice services. However, as bandwidth of the 5GC network gradually increases and transmission quality continuously improves, the 5GC network can also provide required connection services for various applications, such as video services, games, and online live broadcast. With deployment of cloud networks in the future, services such as cloud photographing services, large-scale scenario games, virtual reality (virtual reality, VR), and extended reality (extended reality, XR) that have extremely high requirements on storage and computational power resources may be offloaded from mobile phones to the cloud. Specifically, after the services are deployed on a cloud server, a mobile phone (namely, user equipment) establishes a connection to the cloud server through the 5GC network, starts a corresponding application on the cloud server, and then the application initiates a registration procedure to the 5GC. In this way, the mobile phone can obtain corresponding services by controlling the application on the cloud. In short, in this application scenario, the mobile phone merely serves as a user interface for user interaction, and the cloud server provide all resources such as storage and computational power required for running the application. This decoupling eliminates dependency on hardware resources of the mobile phone. The application started by the mobile phone by controlling the cloud server may be referred to as a cloud phone application (application, APP).

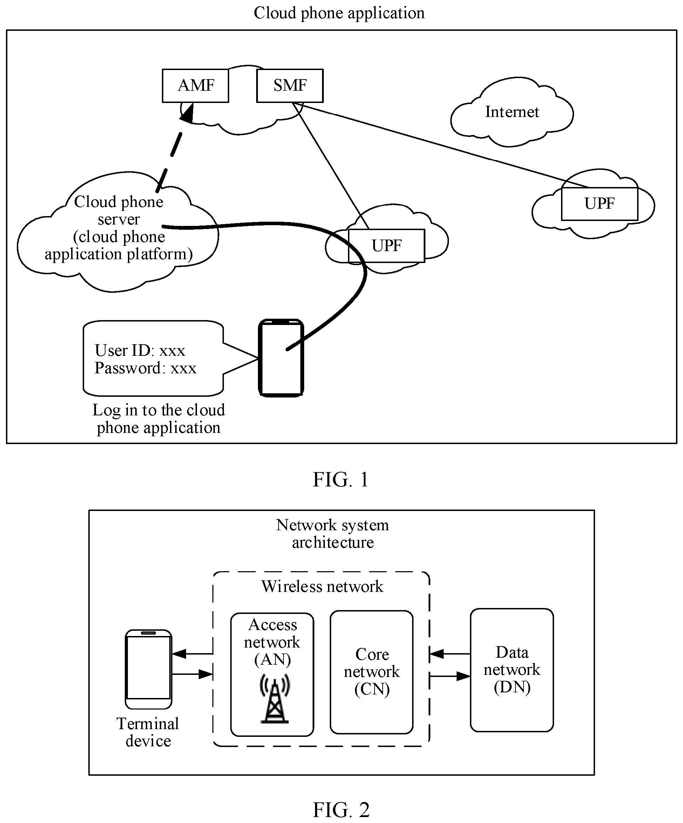

As shown in FIG. 1, a user installs a cloud phone APP on a mobile phone. When the user needs to log in to the cloud phone application, the user starts the cloud phone APP and enters a user name (User ID) and a password (Password) that correspond to a cloud phone account. The 5GC network establishes a connection between the mobile phone and a cloud phone server (namely, the cloud server mentioned above), and transfers information such as the user name and the password to the cloud phone server for user authentication and authorization. If the authentication and authorization on the user succeeds, the cloud phone application initiates a registration procedure to the 5GC again, and interacts with the 5GC as virtual user equipment. Subsequently, the user may operate the cloud phone server via a mobile phone user interface to perform various service operations.

However, the foregoing usage mode of the cloud phone is currently not commercially deployed on a large scale. A main reason is that when a cloud phone server (also referred to as a cloud phone application platform) initiates a registration procedure to a 5GC as virtual user equipment, the 5GC cannot obtain location information of a user (namely, location information of a user who logs in to a cloud phone account). As a result, some services, for example, voice services, that have high location requirements cannot be implemented by using the cloud phone. This limits usage scenarios of the cloud phone. In addition, currently, a binding relationship between a cloud phone account and a mobile phone identifier cannot be supported, and there is a risk that an unauthorized user operates a cloud phone server on any mobile phone in the case of leakage of a user name and a password of a cloud phone account. This compromises security of the cloud phone account.

### SUMMARY

Embodiments of this application provide a communication method and an apparatus, to ensure that a core network obtains location information of a user who logs in to a cloud phone account, and improve security of the cloud phone account.

According to a first aspect, this application provides a communication method. The method includes: obtaining first subscription data of a terminal device and a first identifier; and determining, based on the first subscription data, that the first identifier is allowed to access a network, and sending a first message to a server, where the first message includes an identifier of a first access and mobility management function AMF and/or a temporary identifier of the terminal device.

According to the method described in the first aspect, when the SMF determines, based on the first subscription data, that the first identifier is allowed to access the network, the SMF may notify the server of the identifier of the first AMF accessed by the terminal device. In this way, when the server initiates a registration procedure to the first AMF as virtual user equipment, if the server can be connected to the first AMF, the server may directly obtain location information of the terminal device from the first AMF. In this case, the location information of the terminal device may be stored in second context information corresponding to the first identifier as location information of the first identifier (namely, location information of a cloud phone account). In addition, a binding relationship between the first identifier (for example, the cloud phone account) and a mobile phone identifier may be supported in the first subscription data. This helps improve security of the cloud phone account.

In a possible implementation, the first subscription data includes a bound second identifier; and the determining, based on the first subscription data, that the first identifier is allowed to access the network includes: when the first identifier matches the bound second identifier included in the first subscription data, allowing the first identifier to access the network. This manner helps improve the security of the cloud phone account.

In a possible implementation, the second identifier includes at least one user identifier whose access is allowed or first indication information, where the first indication information indicates that any user identifier is allowed to access the network through the terminal device; and the first identifier includes a first user identifier; and before the determining, based on the first subscription data, that the first identifier is allowed to access the network, the method further includes: when the first user identifier matches the at least one user identifier included in the first subscription data, allowing the first user identifier to access the network; or when the first subscription data includes the first indication information, allowing the first user identifier to access the network. This manner helps improve the security of the cloud phone account.

In a possible implementation, the first identifier includes the first user identifier; and the obtaining the first identifier includes: receiving an uplink protocol data unit PDU session establishment request message from the terminal device, where the uplink PDU session establishment request message includes the first user identifier; or receiving a session request message from the first AMF, where the session request message includes the first user identifier.

In a possible implementation, before the determining, based on the first subscription data, that the first identifier is allowed to access the network, the method further includes: sending a first authentication and authorization request message to the server, where the first authentication and authorization request message includes the first identifier and/or a fourth identifier of the terminal device; and receiving a response to the first authentication and authorization request from the server, where the response to the first authentication and authorization request includes the first identifier. This manner helps improve data communication security.

In a possible implementation, the first message further includes first success indication information, and the first success indication information indicates that the first identifier is allowed to access the network.

According to a second aspect, this application provides a communication method. The method includes: receiving a first message from a session management function SMF, where the first message includes an identifier of a first access and mobility management function AMF and/or a temporary identifier of a terminal device; and sending a first registration request message to a second AMF, where the first registration request message includes a first identifier and/or the temporary identifier.

For beneficial effects of possible implementations of the second aspect, refer to the beneficial effects of the possible implementations of the first aspect. Details are not described herein again.

In a possible implementation, the second AMF is the same as the first AMF, or the second AMF is different from the first AMF.

In a possible implementation, before the receiving the first message from the SMF, the method further includes: receiving a first authentication and authorization request message from the SMF, where the first authentication and authorization request message includes the first identifier and/or a fourth identifier of the terminal device; determining second subscription data corresponding to the first identifier, where the second subscription data includes a third identifier of the terminal device; and when authentication and authorization on the first identifier succeeds, sending a response to the first authentication and authorization request to the SMF, where the response to the first authentication and authorization request includes the first identifier.

In a possible implementation, the sending the response to the first authentication and authorization request to the SMF includes: determining, based on the second subscription data, that the first identifier is allowed to access a network through the terminal device, and sending the response to the first authentication and authorization request to the SMF.

In a possible implementation, the determining, based on the second subscription data, that the first identifier is allowed to access the network through the terminal device includes: when the fourth identifier of the terminal device matches the third identifier of the terminal device included in the second subscription data, allowing the first identifier to access the network through the terminal device. This manner helps improve security of a cloud phone account.

In a possible implementation, the first message further includes first success indication information, and the first success indication information indicates that the first identifier is allowed to access the network.

According to a third aspect, this application provides a communication method. The method includes: receiving a first registration request message from a server, where the first registration request message includes a first identifier and/or a temporary identifier of a terminal device; determining, based on the temporary identifier or a third identifier of the terminal device, first context information corresponding to the terminal device; and obtaining location information of the terminal device from the first context information.

For beneficial effects of possible implementations of the third aspect, refer to the beneficial effects of the possible implementations of the first aspect. Details are not described herein again.

In a possible implementation, the method further includes: creating second context information corresponding to the first identifier; and storing the location information in the second context information.

In a possible implementation, the first registration request message includes the first identifier; and before the determining, based on the temporary identifier or the third identifier of the terminal device, the first context information corresponding to the terminal device, the method further includes: obtaining second subscription data corresponding to the first identifier, where the second subscription data includes the third identifier of the terminal device and/or the temporary identifier.

According to a fourth aspect, this application provides a communication method. The method includes: receiving a first registration request message from a server, where the first registration request message includes a first identifier and/or a temporary identifier of a terminal device; determining an identifier of a first access and mobility management function AMF based on the temporary identifier, the first identifier, or a third identifier of the terminal device; sending a second message to the first AMF, where the second message is used to request location information of the terminal device, and the second message includes at least one of the following information: the temporary identifier or the third identifier; and receiving, from the first AMF, a response message corresponding to the second message, where the response message corresponding to the second message includes the location information.

According to the method described in the fourth aspect, when the SMF determines, based on first subscription data, that the first identifier is allowed to access a network, the SMF may notify the server of the identifier of the first AMF accessed by the terminal device. In this way, when the server initiates a registration procedure to the first AMF as virtual user equipment, if the server cannot be connected to the first AMF and is connected to a second AMF (namely, another AMF), the second AMF (namely, the another AMF) may obtain the location information of the terminal device from the first AMF. In this case, the location information of the terminal device may be stored in second context information corresponding to the first identifier as location information of the first identifier (namely, location information of a cloud phone account). In addition, a binding relationship between the first identifier (for example, the cloud phone account) and a mobile phone identifier may be supported in the first subscription data. This helps improve security of the cloud phone account.

In a possible implementation, the method further includes: creating the second context information corresponding to the first identifier; and storing the location information in the second context information.

In a possible implementation, the first registration request message includes the first identifier; and before the determining the identifier of the first AMF based on the temporary identifier, the first identifier, or the third identifier of the terminal device, the method further includes: obtaining second subscription data corresponding to the first identifier, where the second subscription data includes the third identifier of the terminal device and/or the temporary identifier.

In a possible implementation, the determining the identifier of the first AMF based on the third identifier of the terminal device includes: obtaining information that is about the first AMF and that is included in subscription data corresponding to the third identifier of the terminal device, where the information about the first AMF includes the identifier of the first AMF.

In a possible implementation, the first registration request message includes the first identifier, and the determining the identifier of the first AMF based on the first identifier includes: obtaining the second subscription data corresponding to the first identifier, where the second subscription data includes information about the first AMF, and the information about the first AMF includes the identifier of the first AMF.

According to a fifth aspect, this application provides a communication method. The method includes: receiving a second message from a second access and mobility management function AMF, where the second message is used to request location information of a terminal device, and the second message includes at least one of the following information: a temporary identifier of the terminal device or a third identifier of the terminal device; determining, based on the temporary identifier or the third identifier, first context information corresponding to the terminal device; obtaining the location information from the first context information; and sending, to the second AMF, a response message corresponding to the second message, where the response message corresponding to the second message includes the location information.

For beneficial effects of possible implementations of the fifth aspect, refer to the beneficial effects of the possible implementations of the fourth aspect. Details are not described herein again.

According to a sixth aspect, this application provides a communication method. The method includes: obtaining a first user identifier and third subscription data of a terminal device; determining, based on the third subscription data, that the first user identifier is allowed to access a network, and sending a third message to a server; or determining, based on the third subscription data, to send a third message to a server, where the third message includes location information of the terminal device.

According to the method described in the sixth aspect, when an SMF determines, based on the third subscription data, that the first user identifier is allowed to access the network, the SMF may notify the server of the location information of the terminal device, and the server may store the location information of the terminal device. When the server initiates a registration procedure to the first AMF as virtual user equipment, the location information of the terminal device may be carried to the first AMF. In this case, the first AMF may store the location information of the terminal device in fourth context information corresponding to the first user identifier as location information of the first user identifier (namely, location information of a cloud phone account). In addition, a binding relationship between the first user identifier (for example, the cloud phone account) and a mobile phone identifier may be supported in the third subscription data. This helps improve security of the cloud phone account.

In a possible implementation, the third subscription data includes at least one user identifier whose access is allowed or first indication information, and the first indication information indicates that any user identifier is allowed to access the network through the terminal device; and the determining, based on the third subscription data, that the first user identifier is allowed to access the network includes: when the first user identifier matches the at least one user identifier included in the third subscription data, allowing the first user identifier to access the network; or when the third subscription data includes the first indication information, allowing the first user identifier to access the network. This manner helps improve the security of the cloud phone account.

In a possible implementation, the obtaining the first user identifier includes: receiving an uplink PDU session establishment request message from the terminal device, where the uplink PDU session establishment request message includes the first user identifier; or receiving a session request message from the first AMF, where the session request message includes the first user identifier.

In a possible implementation, before the sending the third message to the server, the method further includes: sending a second authentication and authorization request message to the server, where the second authentication and authorization request message includes the first user identifier; and receiving a response to the second authentication and authorization request from the server, where the response to the second authentication and authorization request includes at least one of the following information: the first user identifier or location request indication information.

In a possible implementation, the third message further includes second success indication information, and the second success indication information indicates that the first user identifier is allowed to access the network.

According to a seventh aspect, this application provides a communication method. The method includes: receiving a third message from an SMF, where the third message includes location information of a terminal device; storing the location information in fourth subscription data corresponding to a first user identifier or third context information corresponding to the first user identifier; and sending a second registration request message to a first AMF, where the second registration request message includes the location information and a second user identifier.

For beneficial effects of possible implementations of the seventh aspect, refer to the beneficial effects of the possible implementations of the sixth aspect. Details are not described herein again.

In a possible implementation, before the receiving the third message from the SMF, the method further includes: receiving a second authentication and authorization request message from the SMF, where the second authentication and authorization request message includes the first user identifier; and determining the fourth subscription data corresponding to the first user identifier, where the fourth subscription data includes a third identifier of the bound terminal device; and when authentication and authorization on the first user identifier succeeds, sending a response to the second authentication and authorization request to the SMF, where the response to the second authentication and authorization request includes at least one of the following information: the first user identifier or location request indication information.

In a possible implementation, the sending the response to the second authentication and authorization request to the SMF includes: determining, based on the fourth subscription data, that the first user identifier is allowed to access a network through the terminal device, and sending the response to the second authentication and authorization request to the SMF.

In a possible implementation, the determining, based on the fourth subscription data, that the first user identifier is allowed to access the network through the terminal device includes: when a fourth identifier of the terminal device matches the third identifier of the terminal device included in the fourth subscription data, allowing the first user identifier to access the network through the terminal device. This manner helps improve security of a cloud phone account.

In a possible implementation, the third message further includes second success indication information, and the second success indication information indicates that the first user identifier is allowed to access the network.

According to an eighth aspect, this application provides a communication method. The method includes: receiving a second registration request message from a server, where the second registration request message includes location information of a terminal device and a second user identifier; creating fourth context information corresponding to the second user identifier; and storing the location information in the fourth context information.

For beneficial effects of possible implementations of the eighth aspect, refer to the beneficial effects of the possible implementations of the sixth aspect. Details are not described herein again.

According to a ninth aspect, this application provides a communication method. The method includes: obtaining first subscription data of a terminal device and a first identifier; determining, based on the first subscription data, that the first identifier is allowed to access a network, and sending a fourth message to a UDM or a PCF, where the fourth message includes location information of the terminal device and the first identifier; receiving, from the UDM or the PCF, a response message corresponding to the fourth message; and sending a fifth message to a server, where the fifth message includes the first identifier.

According to the method described in the ninth aspect, when an SMF determines, based on the first subscription data, that the first identifier is allowed to access the network, the SMF may send the location information of the terminal device to the UDM or the PCF for storage. When the server initiates a registration procedure to a second AMF as virtual user equipment, the second AMF may obtain the location information of the terminal device from the UDM or the PCF. In this case, the location information of the terminal device may be stored in second context information corresponding to the first identifier as location information of the first identifier (namely, location information of a cloud phone account). In addition, a binding relationship between the first identifier (for example, the cloud phone account) and a mobile phone identifier may be supported in the first subscription data. This helps improve security of the cloud phone account.

In a possible implementation, the first subscription data includes a bound second identifier; and the determining, based on the first subscription data, that the first identifier is allowed to access the network includes: when the first identifier matches the bound second identifier included in the first subscription data, allowing the first identifier to access the network. This manner helps improve the security of the cloud phone account.

In a possible implementation, the second identifier includes at least one user identifier whose access is allowed or first indication information, where the first indication information indicates that any user identifier is allowed to access the network through the terminal device; and the first identifier includes a first user identifier; and before the determining, based on the first subscription data, that the first identifier is allowed to access the network, the method further includes: when the first user identifier matches the at least one user identifier included in the first subscription data, allowing the first user identifier to access the network; or when the first subscription data includes the first indication information, allowing the first user identifier to access the network. This manner helps improve the security of the cloud phone account.

In a possible implementation, the first identifier includes the first user identifier; and the obtaining the first identifier includes: receiving an uplink PDU session establishment request message from the terminal device, where the uplink PDU session establishment request message includes the first user identifier; or receiving a session request message from a first AMF, where the session request message includes the first user identifier.

In a possible implementation, the obtaining the first identifier includes: sending a first authentication and authorization request message to the server; and receiving a response to the first authentication and authorization request from the server, where the response to the first authentication and authorization request includes the first identifier. This manner helps improve data communication security.

In a possible implementation, the fifth message further includes first success indication information, and the first success indication information indicates that the first identifier is allowed to access the network.

According to a tenth aspect, this application provides a communication method. The method includes: receiving a fourth message from an SMF, where the fourth message includes location information of a terminal device and a first identifier; determining second subscription data corresponding to the first identifier; storing the location information in the second subscription data; and sending, to the SMF, a response message corresponding to the fourth message.

For beneficial effects of possible implementations of the tenth aspect, refer to the beneficial effects of the possible implementations of the ninth aspect. Details are not described herein again.

According to an eleventh aspect, this application provides a communication method. The method includes: receiving a fourth message from an SMF, where the fourth message includes location information of a terminal device and a first identifier; determining policy subscription data corresponding to the first identifier; storing the location information in the policy subscription data; and sending, to the SMF, a response message corresponding to the fourth message.

For beneficial effects of possible implementations of the eleventh aspect, refer to the beneficial effects of the possible implementations of the ninth aspect. Details are not described herein again.

According to a twelfth aspect, this application provides a communication method. The method includes: receiving a fifth message from a server, where the fifth message includes a first identifier; and sending a fourth registration request message to a second AMF, where the fourth registration request message includes the first identifier.

For beneficial effects of possible implementations of the twelfth aspect, refer to the beneficial effects of the possible implementations of the ninth aspect. Details are not described herein again.

In a possible implementation, before the sending the fourth registration request message to the second AMF, the method further includes: receiving a first authentication and authorization request message from an SMF; determining second subscription data corresponding to the first identifier, where the second subscription data includes a third identifier of a bound terminal device; and when authentication and authorization on the first identifier succeeds, sending a response to the first authentication and authorization request to the SMF, where the response to the first authentication and authorization request includes the first identifier.

In a possible implementation, the sending the response to the first authentication and authorization request to the SMF includes: determining, based on the second subscription data, that the first identifier is allowed to access a network through the terminal device, and sending the response to the first authentication and authorization request to the SMF.

In a possible implementation, the determining, based on the second subscription data, that the first identifier is allowed to access the network through the terminal device includes: when a fourth identifier of the terminal device matches the third identifier that is of the bound terminal device and that is included in the second subscription data, allowing the first identifier to access the network through the terminal device.

In a possible implementation, the fifth message further includes first success indication information, and the first success indication information indicates that the first identifier is allowed to access the network.

According to a thirteenth aspect, this application provides a communication method. The method includes: receiving a fourth registration request message from a server, where the fourth registration request message includes a first identifier; obtaining, from a UDM, second subscription data corresponding to the first identifier, where the second subscription data includes location information of a terminal device; or obtaining, from a PCF, policy subscription data corresponding to the first identifier, where the policy subscription data includes location information of a terminal device; creating second context information corresponding to the first identifier; and storing the location information in the second context information.

For beneficial effects of possible implementations of the thirteenth aspect, refer to the beneficial effects of the possible implementations of the ninth aspect. Details are not described herein again.

According to a fourteenth aspect, this application provides a communication apparatus. The communication apparatus may be an SMF, a server, a first AMF, a second AMF, a UDM, or a PCF; may be an apparatus in an SMF, a server, a first AMF, a second AMF, a UDM, or a PCF; or may be an apparatus that can be used together with an SMF, a server, a first AMF, a second AMF, a UDM, or a PCF. The communication apparatus may alternatively be a chip system. The communication apparatus may perform the method according to the first aspect to the thirteenth aspect. A function of the communication apparatus may be implemented by using hardware, or may be implemented by hardware executing corresponding software. The hardware or the software includes one or more units or modules corresponding to the foregoing function. The unit or module may be software and/or hardware. For operations performed by the communication apparatus and beneficial effects, refer to the method and beneficial effects according to the first aspect to the thirteenth aspect.

According to a fifteenth aspect, this application provides a communication apparatus. The communication apparatus includes a processor; and when the processor invokes a computer program in a memory, the method according to the first aspect to the thirteenth aspect is performed.

According to a sixteenth aspect, this application provides a communication apparatus. The communication apparatus includes a processor and a memory, the processor is coupled to the memory, and the processor is configured to implement the method according to the first aspect to the thirteenth aspect.

According to a seventeenth aspect, this application provides a communication apparatus. The communication apparatus includes a processor, a memory, and a transceiver, the processor is coupled to the memory, the transceiver is configured to send and receive data, and the processor is configured to implement the method according to the first aspect to the thirteenth aspect.

According to an eighteenth aspect, this application provides a chip. The chip includes a processor and an interface, the processor is coupled to the interface, the interface is configured to receive or output a signal, and the processor is configured to execute code instructions, so that the method according to the first aspect to the thirteenth aspect is performed.

According to a nineteenth aspect, this application provides a computer-readable storage medium. The storage medium stores a computer program or instructions. When the computer program or the instructions are executed by a communication apparatus, the method according to the first aspect to the thirteenth aspect is implemented.

According to a twentieth aspect, this application provides a communication system. The communication system includes an SMF, a server, and a first AMF. The SMF is configured to perform the method according to the first aspect, the server is configured to perform the method according to the second aspect, and the first AMF is configured to perform the method according to the third aspect.

According to a twenty-first aspect, this application provides a communication system. The communication system includes an SMF, a server, a first AMF, and a second AMF. The SMF is configured to perform the method according to the first aspect, the server is configured to perform the method according to the second aspect, the second AMF is configured to perform the method according to the fourth aspect, and the first AMF is configured to perform the method according to the fifth aspect.

According to a twenty-second aspect, this application provides a communication system. The communication system includes an SMF, a server, and a first AMF. The SMF is configured to perform the method according to the sixth aspect, the server is configured to perform the method according to the seventh aspect, and the first AMF is configured to perform the method according to the eighth aspect.

According to a twenty-third aspect, this application provides a communication system. The communication system includes an SMF, a server, a second AMF, and a UDM. The SMF is configured to perform the method according to the ninth aspect, the UDM is configured to perform the method according to the tenth aspect, the server is configured to perform the method according to the twelfth aspect, and the second AMF is configured to perform the method according to the thirteenth aspect. The second AMF may be the same as or different from a first AMF.

According to a twenty-fourth aspect, this application provides a communication system. The communication system includes an SMF, a server, a second AMF, and a PCF. The SMF is configured to perform the method according to the ninth aspect, the PCF is configured to perform the method according to the eleventh aspect, the server is configured to perform the method according to the twelfth aspect, and the second AMF is configured to perform the method according to the thirteenth aspect. The second AMF may be the same as or different from a first AMF.

According to a twenty-fifth aspect, this application provides a computer program product including instructions. When a computer reads and executes the computer program product, the computer is caused to perform the method according to the first aspect to the thirteenth aspect.

### BRIEF DESCRIPTION OF DRAWINGS

FIG. 1 is a diagram of a cloud phone application scenario according to an embodiment of this application;
FIG. 2 is a diagram of an architecture of a network system according to an embodiment of this application;
FIG. 3 is a diagram of an architecture of a core network according to an embodiment of this application;
FIG. 4 is a diagram of an architecture of a core network supporting trusted non-3GPP access according to an embodiment of this application;
FIG. 5 is a diagram of a system architecture based on a cloud phone scenario according to an embodiment of this application;
FIG. 6 is a schematic flowchart of a communication method according to an embodiment of this application;
FIG. 7A to FIG. 7C are a schematic flowchart of another communication method according to an embodiment of this application;
FIG. 8 is a schematic flowchart of another communication method according to an embodiment of this application;
FIG. 9A to FIG. 9C are a schematic flowchart of another communication method according to an embodiment of this application;
FIG. 10 is a schematic flowchart of another communication method according to an embodiment of this application;
FIG. 11A to FIG. 11C are a schematic flowchart of another communication method according to an embodiment of this application;
FIG. 12 is a schematic flowchart of another communication method according to an embodiment of this application;
FIG. 13A to FIG. 13C are a schematic flowchart of another communication method according to an embodiment of this application;
FIG. 14 is a schematic flowchart of another communication method according to an embodiment of this application;
FIG. 15A to FIG. 15C are a schematic flowchart of another communication method according to an embodiment of this application;
FIG. 16 is a diagram of a structure of a communication apparatus according to an embodiment of this application;
FIG. 17 is a diagram of a structure of another communication apparatus according to an embodiment of this application; and
FIG. 18 is a diagram of a structure of a chip according to an embodiment of this application.

### DESCRIPTION OF EMBODIMENTS

The terms "first", "second", and the like in this specification, claims, and accompanying drawings of this application are used to distinguish between different objects, but are not used to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. A person skilled in the art explicitly and implicitly understands that embodiment described in this specification may be combined with another embodiment.

In this application, "at least one (item)" means one or more, "a plurality of" means two or more, "at least two (items)" means two, three, or more, and "and/or" is used to describe a correspondence between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of the items, including a single item (piece) or any combination of a plurality of items (pieces). For example, at least one of a, b, or c may indicate a, b, c, a and b, a and c, b and c, or a, b, and c, where a, b, and c may be singular or plural.

To better understand embodiments of this application, the following first describes a system architecture in embodiments of this application.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a new radio (new radio, NR) system, a 5th generation (5th generation, 5G) communication system like a 3rd generation partnership project (3rd generation partnership project, 3GPP) service-based network architecture (service-based architecture, SBA), or a communication system, like a 6th generation (6th generation, 6G) communication system, evolved after 5G.

FIG. 2 is a diagram of a network architecture according to an embodiment of this application. As shown in FIG. 2, a next-generation mobile communication network architecture formulated in the 3rd generation partnership project (3rd generation partnership project, 3GPP) standard is referred to as a 5G network architecture. A terminal device may access a wireless network, to obtain a service of an external network (for example, a data network (data network, DN)) through the wireless network or communicate with another device, for example, another terminal device, through the wireless network. The wireless network includes a (radio) access network ((radio) access network, (R)AN) and a core network (core network, CN). The (R)AN (described as a RAN below) is configured to connect the terminal device to the wireless network, and the CN is configured to: manage the terminal device and provide a gateway for communicating with the DN. The following separately describes in detail the terminal device, the RAN, the CN, and the DN in the network architecture in FIG. 2.

### 1. Terminal device

The terminal device includes a device that provides voice and/or data connectivity for users. For example, the terminal device is a device that has a wireless transceiver function; and may be deployed on land, where the deployment includes indoor, outdoor, handheld, wearable, or vehicle-mounted deployment, may be deployed on water (for example, on a ship), or may be deployed in air (for example, on an airplane, a balloon, and a satellite). The terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a vehicle-mounted terminal, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal, or the like. An application scenario is not limited in embodiments of this application. The terminal device may also be sometimes referred to as a terminal, user equipment (user equipment, UE), an access terminal, a vehicle-mounted terminal, a terminal in industrial control, a UE unit, a UE station, a mobile station, a remote station, a remote terminal, a mobile device, a UE terminal, a wireless communication device, a UE proxy, a UE apparatus, or the like. The terminal may alternatively be fixed or movable. It may be understood that all or some functions of the terminal in this application may alternatively be implemented by using a software function running on hardware, or may be implemented by using an instantiated virtualization function on a platform (for example, a cloud platform). The terminal device in this application may be a 5G terminal, or may be a 6G terminal. This is not limited in this application.

### 2. RAN

The RAN may include one or more RAN devices (or access network devices). An interface between an access network device and the terminal device may be a Uu interface (or referred to as an air interface). Certainly, in communication evolved after 5G, names of the interfaces may remain unchanged, or may be replaced with other names. This is not limited in this application.

The access network device is a node or a device that connects the terminal device to a wireless network. The access network device includes, for example, but is not limited to, a next generation NodeB (next generation NodeB, gNB) in a 5G communication system, an evolved NodeB (evolved NodeB, eNB), a next generation evolved NodeB (next generation eNB, ng-eNB), a radio backhaul device, a radio network controller (radio network controller, RNC), a NodeB (NodeB, NB), a home base station ((home evolved NodeB, HeNB) or (home NodeB, HNB)), a baseband unit (baseband unit, BBU), a transmitting and receiving point (transmitting and receiving point, TRP), a transmitting point (transmitting point, TP), a mobile switching center, or a device that functions as a base station in device-to-device (device-to-device, D2D), vehicle-to-everything (vehicle-to-everything, V2X), machine-to-machine (machine-to-machine, M2M) communication; or may include a central unit (centralized unit, CU) and a distributed unit (distributed unit, DU) in a cloud access network (cloud radio access network, C-RAN) system, a network device in a non-terrestrial network (non-terrestrial network, NTN) communication system, in other words, the network device may be deployed on a high-altitude platform or a satellite, or the like. This is not specifically limited in embodiments of this application. The RAN in this application may be a 5G RAN or a 6G RAN. This is not limited in this application.

### 3. CN

The CN may include one or more CN devices (which may be understood as network element devices or functional network elements (network functions, NFs)). In the following descriptions, the CN device is collectively referred to as a core network element (for example, a first core network element and a second core network element in the following descriptions).

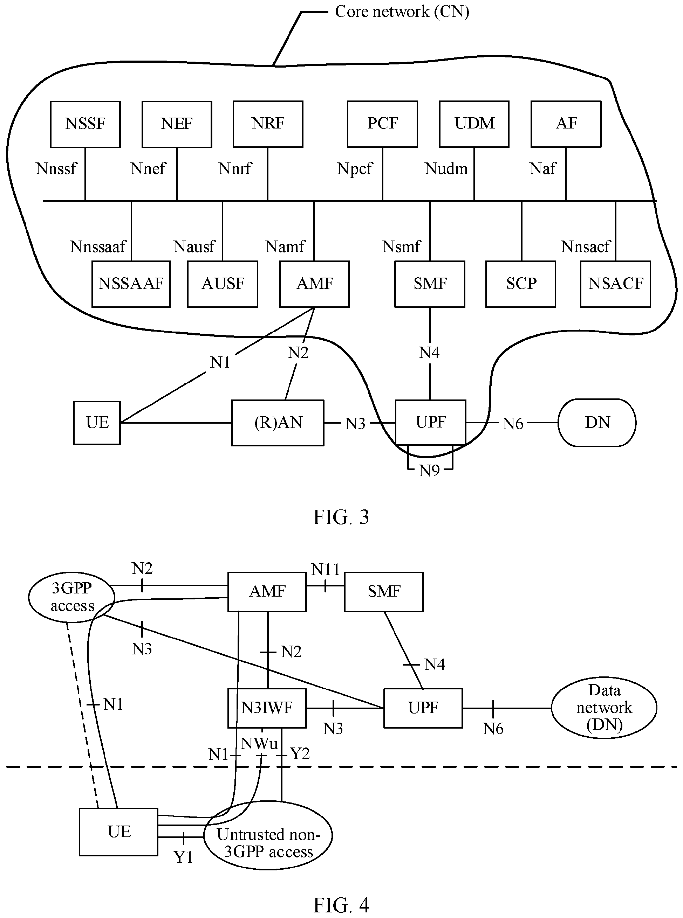

FIG. 3 is a diagram of a structure of a CN according to this application. The CN in FIG. 3 is a diagram of a CN in a 5G network architecture. The CN shown in FIG. 3 includes a plurality of CN devices: a network slice selection function (network slice selection function, NSSF), a network exposure function (network exposure function, NEF), a network repository function (network repository function, NRF), a policy control function (policy control function, PCF), a unified data management (unified data management, UDM), an application function (application function, AF), a network control function (network control function, NCF), a network slice-specific authentication and authorization function (network slice-specific authentication and authorization function, NSSAAF), an authentication server function (authentication server function, AUSF), an access and mobility management function (access and mobility management function, AMF), a session management function (session management function, SMF), a user plane function (user plane function, UPF), a service communication proxy (service communication proxy, SCP), and a network slice admission control function (network slice admission control function, NSACF). The AMF is a control plane function provided by an operator network, and is responsible for access control and mobility management for accessing the operator network by the terminal device, for example, including functions such as mobility status management, temporary user identity assignment, and user authentication and authorization.

The SMF is a control plane function provided by the operator network, and is responsible for managing a protocol data unit (protocol data unit, PDU) session of the terminal device. The PDU session is a channel for PDU transmission. The terminal device and a DN need to perform PDU transmission with each other through the PDU session. The SMF is responsible for establishment, maintenance, deletion, and the like of the PDU session. The SMF includes session-related functions, for example, session management (for example, session establishment, modification, and release, including tunnel maintenance between the UPF and the RAN), UPF selection and control, service and session continuity (service and session continuity, SSC) mode selection, and roaming.

The PCF is a control plane function provided by an operator, including a user subscription data management function, a policy control function, a charging policy control function, quality of service (quality of service, QoS) control, and the like, and is mainly configured to provide a PDU session policy for the SMF. The policy may include a charging-related policy, a QoS-related policy, an authorization-related policy, and the like.

The UPF is a gateway provided by the operator and a gateway for communication between the operator network and the DN. The UPF includes user plane-related functions such as data packet routing and transmission, packet detection, quality of service (quality of service, QoS) processing, uplink packet detection, and downlink data packet storage.

The UDM is mainly configured to: manage subscription data and authentication data of a user, and perform authentication credit processing, user identification handling, access authorization, registration/mobility management, subscription management, short message service message management, and the like. In some embodiments, the UDM may further include a unified data repository (unified data repository, UDR). Alternatively, in some other embodiments, a 3GPP SBA of the 5G system may further include a UDR. The UDR is configured to provide storage and retrieval for a PCF policy, storage and retrieval of structured data for exposure, storage of user information requested by the application function, and the like.

It should be noted that the foregoing CN devices may also be referred to as network elements or functional network elements. In a 5G communication system, functional network elements may be names of the functional network elements shown in FIG. 3. In a communication system (for example, a 6G communication system) evolved after 5G, functional network elements may still be the names of the functional network elements shown in FIG. 3, or may have other names. For example, in a 5G communication system, a user plane function may be a UPF. In a communication system (for example, a 6G communication system) evolved after 5G, the user plane function may still be a UPF, or may have another name. This is not limited in this application.

It should be further noted that, in a 5G communication system, functions implemented by using the functional network elements may be independent as shown in FIG. 3. In a communication system (for example, a 6G communication system) evolved after 5G, each functional network element may still be in an independent state as shown in FIG. 3, or functions of a plurality of functional network elements in FIG. 3 may be implemented by using an integrated functional network element. For example, in a 5G communication system, a user plane-related function is implemented by using a UPF, and an access and mobility management-related function is implemented by using an AMF. In a communication system (for example, a 6G communication system) evolved after 5G, a user plane-related function may still be implemented by using a UPF, and an access and mobility management-related function may still be implemented by using an AMF, or both a user plane-related function and an access and mobility management-related function are implemented by using an integrated function network element. This is not limited in this application.

In FIG. 3, Npcf, Nudm, Naf, Namf, Nsmf, N1, N2, N3, N4, and N6 are interface sequence numbers. For meanings of the interface serial numbers, refer to meanings defined in related standard protocols. This is not limited herein.

### 4. DN

The DN, also be referred to as a packet data network (packet data network, PDN), is a network located outside an operator network. The operator network may access a plurality of DNs. Application servers corresponding to a plurality of services may be deployed on the DN, to provide a plurality of possible services for the terminal device.

The 5G network architecture supports access to the CN by using a 3GPP-defined radio access technology (radio access technology, RAT). 3GPP-defined RATs include LTE, 5G RAN, and the like. The 5G network architecture further supports access to the CN by using a non-3GPP (non-3GPP, N3G) access technology via a non-3GPP interworking function (non-3GPP interworking function, N3IWF) or a next generation access gateway (next generation packet data gateway, ngPDG).

When a 5G core network (5G core, 5GC) supports non-3GPP access, a 5G network architecture is shown in FIG. 4. An access network includes a 3GPP access network and a non-3GPP access network. An access device in the 3GPP access network may be referred to as a RAN device. An N3IWF is a non-3GPP access gateway. The non-3GPP access network may include, for example, an untrusted wireless local area network (wireless local area network, WLAN) access network, and an N3IWF device may include, for example, a router.

It should be noted that the 5G core network further supports trusted non-3GPP access and/or wired network access. A trusted non-3GPP access network may include, for example, a trusted WLAN network, and a wired network may include, for example, fixed home network access (hereinafter referred to as a fixed network for short). When the 5G core network supports the trusted non-3GPP access, a 5G network architecture of the 5G core network is similar to that in FIG. 4. Untrusted non-3GPP access in FIG. 4 may be replaced with the trusted non-3GPP access, and the N3IWF may be replaced with a trusted non-3GPP access gateway (trusted non-3GPP gateway function, TNGF). When the 5G core network supports the wired network access, a 5G network architecture of the 5G core network is similar to that in FIG. 4. Untrusted non-3GPP access in FIG. 4 may be replaced with the wired network access, and the N3IWF may be replaced with a wired network access gateway (wireline access gateway function, W-AGF). An access network device between UE and an access gateway may include a WLAN access point (access point, AP), a fixed access network (fixed access network, FAN) device, a switch, a router, or the like.

It can be learned that the non-3GPP access technology includes an access technology such as trusted WLAN access, untrusted WLAN access, or wired network access. Regardless of the trusted non-3GPP access or the untrusted non-3GPP access, the core network may use the 3GPP access core network architecture and the service interface shown in FIG. 3, or may use the network architecture and a point-to-point interface protocol shown in FIG. 4.

It may be understood that the foregoing network elements or functions may be network elements in a hardware device, or may be software functions running on dedicated hardware or virtualized functions instantiated on a platform (for example, a cloud platform). Optionally, the network element or function may be implemented by using one device, may be jointly implemented by using a plurality of devices, or may be a functional module in one device. This is not specifically limited in embodiments of this application.

Embodiments of this application may be applied to a scenario of a cloud terminal device. The scenario of the cloud terminal device herein may be a cloud phone scenario. The cloud phone scenario is shown in FIG. 1. A user installs a cloud phone application (application, APP) on a mobile phone. When the user needs to log in to the cloud phone application, the user starts the cloud phone APP, and enters a user name (User ID) and a password (Password) that correspond to a cloud phone account. A 5GC network establishes a connection between the mobile phone and a cloud phone server (namely, a cloud server), and transfers information such as the user name and the password to the cloud phone server for user authentication and authorization. If the authentication and authorization on the user succeeds, the cloud phone application initiates a registration procedure to the 5GC again, and interacts with the 5GC as virtual user equipment. Subsequently, the user may operate the cloud phone server through a mobile phone user interface to perform various service operations. In short, in this application scenario, the mobile phone merely serves as a user interaction user interface, and resources, such as storage and computational power, required for running an application are provided by the cloud server. This avoids dependency on hardware resources of the mobile phone. The application started by the mobile phone by controlling the cloud server is the cloud phone APP. Certainly, if another application has a requirement similar to that of a cloud phone, the solutions of the present invention are also applicable.

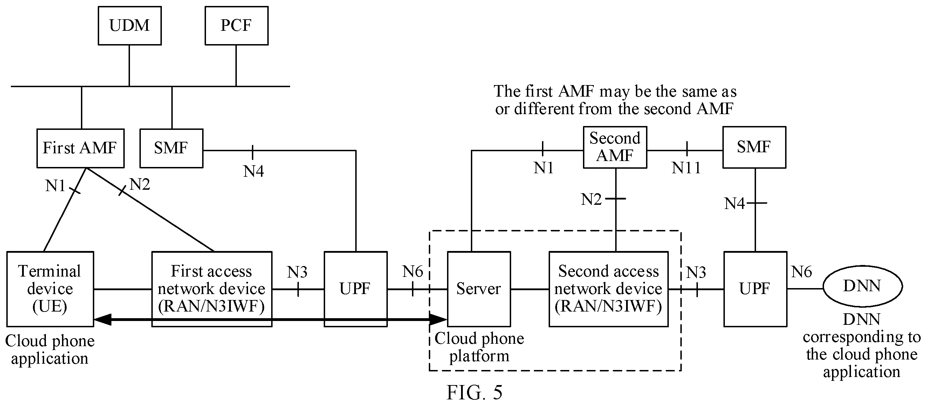

Based on the foregoing descriptions, an embodiment of this application provides a system architecture based on a cloud phone scenario. As shown in FIG. 5, the system architecture includes a terminal device (in this application, an example in which the terminal device is UE is used for description), a first access network device (a RAN/an N3IWF), an AMF (for example, a first AMF and a second AMF, where the first AMF may be the same as or different from the second AMF), an SMF, a PCF, a UDM, a UPF, a server, a second access network device (a RAN/an N3IWF), and a data network name (data network name, DNN). Certainly, the system architecture may include more or fewer functional network elements. This is not limited herein. The terminal device, RAN/N3IWF, AMF, SMF, PCF, UDM, and UPF may be the UE, RAN, N3IWF, AMF, SMF, PCF, UDM and UPF that are mentioned above. The DNN is a DNN corresponding to a cloud phone application and is used to support a network slice. The server may be the cloud phone server (namely, the cloud server) mentioned above, or may be referred to as a cloud phone platform. It should be noted that the server may include a function of the second access network device (in other words, the server and the second access network device may be deployed on a same platform), or may not include a function of the second access network device. This is not limited herein.

When a cloud phone server initiates a registration procedure to a core network as virtual user equipment, to ensure that the core network obtains location information of a user who logs in to a cloud phone account; in addition, to support a binding relationship between the cloud phone account and a mobile phone identifier, and improve security of the cloud phone account, this application provides a communication method and an apparatus. The following further describes in detail a communication method and an apparatus provided in embodiments of this application.

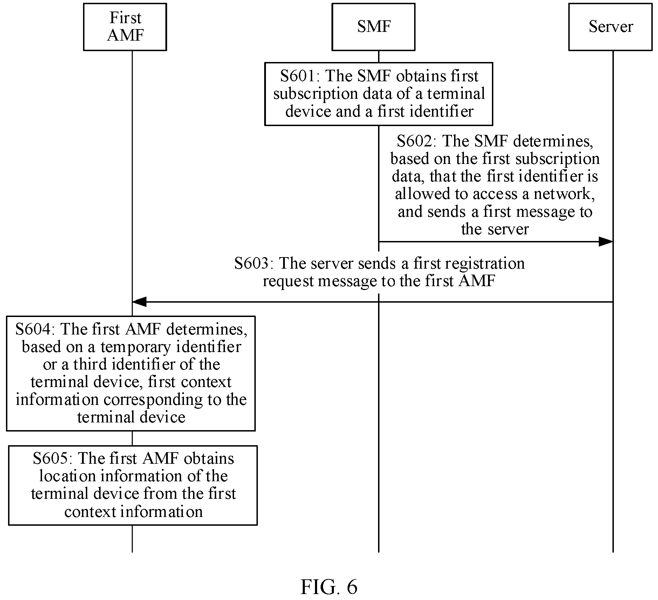

FIG. 6 is a schematic flowchart of a communication method according to an embodiment of this application. As shown in FIG. 6, the communication method includes the following steps S601 to S605. The method shown in FIG. 6 may be performed by the first AMF, the SMF, and the server that are mentioned above. Alternatively, the method shown in FIG. 6 may be performed by a device or a chip having the first AMF, the SMF, and the server. This is not limited in this embodiment of this application. FIG. 6 is described by using an example in which the method is performed by the first AMF, the SMF, and the server. The server herein may include a function of a second access network device (in other words, the server and the second access network device are deployed on a same platform). The first AMF is the same as the second AMF.

S601: The SMF obtains first subscription data of a terminal device and a first identifier.

In this embodiment of this application, the first subscription data of the terminal device may be for establishing a binding relationship between a fourth identifier of the terminal device and a second identifier (for example, an identifier of a cloud terminal device (cloud UE, C-UE), which is not limited herein), in other words, the first subscription data may include the fourth identifier of the terminal device and the second identifier bound to the terminal device. In this embodiment of this application, an example in which the second identifier is the identifier of the cloud terminal device is used for description.

The fourth identifier of the terminal device may be a permanent identifier (subscription permanent identifier, SUPI) of the terminal device, an external identifier (generic public subscription identifier, GPSI) of the terminal device, or the like. The second identifier may be a permanent identifier (C-UE SUPI) that is of the cloud terminal device bound to the terminal device and that is in the first subscription data, an external identifier (C-UE GPSI) of the cloud terminal device, at least one user identifier (for example, a user account, namely, a User ID, of a cloud phone application) whose access is allowed, first indication information (where the first indication information indicates that any user identifier is allowed to access a network through the terminal device, that is, any User indication), or the like. The first identifier herein may be the identifier that is of the cloud terminal device and that is sent by the terminal device, for example, a first user identifier entered by a user on the terminal device, a permanent identifier (C-UE SUPI) that is of the cloud terminal device and that is sent by the terminal device, or the external identifier (C-UE GPSI) that is of the cloud terminal device and that is sent by the terminal device. Optionally, the second identifier may be further bound to a data network name (data network name, DNN) or slice information, to indicate the second identifier bound to the terminal device when the terminal device accesses the DNN or the slice information.

The cloud terminal device may be considered as an application in the server, for example, the cloud phone application mentioned above. The following uses the cloud phone application as an example for description. The cloud phone application may be replaced with any other application. The terminal device may establish a connection to the server corresponding to the cloud phone application, and initiate a registration procedure to a core network by using the server corresponding to the cloud phone application as virtual user equipment. Subsequently, the user may control the server through a user interface of the terminal device, and perform various service operations to obtain corresponding services, to avoid dependence on hardware resources of the terminal device. For example, the terminal device is a mobile phone and the cloud terminal device is a cloud phone application. The first subscription data of the mobile phone may include a binding relationship between a mobile phone identifier and a user account of the cloud phone application.

In a possible implementation, the first identifier includes the first user identifier entered by the user on the terminal device, and a specific implementation in which the SMF obtains the first identifier (that is, the SMF obtains the first user identifier) may be any one of the following three manners.

Manner 1: The SMF receives an uplink PDU session establishment request message from the terminal device, where the uplink PDU session establishment request message includes the first user identifier.

In a specific implementation, after the terminal device registers with a 5GC, the terminal device may obtain, through the first AMF, user route selection policy (UE route selection policy, URSP) information sent by a PCF. The URSP information includes an application identifier (application ID, for example, an identifier of the cloud phone application), and a DNN and/or slice information that correspond/corresponds to the cloud phone application. The user activates the cloud phone application on the terminal device, for example, starts the cloud phone application, and enters the user account (namely, the first user identifier) and a password. The terminal device obtains, based on the URSP information, the DNN and/or the slice information that correspond/corresponds to the cloud phone application. The terminal device initiates a PDU session establishment procedure to the DNN and/or the slice information. To be specific, the terminal device sends an uplink NAS transport message (UL NAS transport message) to the first AMF. The UL NAS transport message includes an uplink PDU session establishment request (PDU session establishment request) message, and at least one of the DNN and the slice information. After obtaining the first user identifier entered by the user, the terminal device includes the first user identifier in the uplink PDU session establishment request message. Correspondingly, the first AMF receives and processes the UL NAS transport message, and continues to forward the uplink PDU session establishment request message, the DNN, and/or the slice information from the terminal device to the SMF. The uplink PDU session establishment request message includes the first user identifier. Correspondingly, the SMF receives the uplink PDU session establishment request message from the terminal device. In this case, the SMF may obtain the first user identifier included in the uplink PDU session establishment request message.

Manner 2: The SMF receives a session request message from the first AMF, where the session request message includes the first user identifier.

In a specific implementation, after the terminal device registers with a 5GC, the terminal device may obtain, through the first AMF, URSP information sent by a PCF. The URSP information includes an application identifier (for example, an identifier of the cloud phone application), and a DNN and/or slice information that correspond/corresponds to the cloud phone application. The user activates the cloud phone application on the terminal device, for example, starts the cloud phone application, and enters the user account (namely, the first user identifier) and a password. The terminal device obtains, based on the URSP information, the DNN and/or the slice information that correspond/corresponds to the cloud phone application. The terminal device initiates a PDU session establishment procedure to the DNN and/or the slice information. To be specific, the terminal device sends a UL NAS transport message to the first AMF. The UL NAS transport message includes an uplink PDU session establishment request message, and at least one of the DNN and the slice information. After obtaining the first user identifier entered by the user, the terminal device includes the first user identifier in the uplink PDU session establishment request message. Correspondingly, the first AMF receives and processes the UL NAS transport message. In this case, the first AMF may obtain the first user identifier carried in the uplink PDU session establishment request message. The first AMF may further send the session request message to the SMF, where the session request message includes the first user identifier. Correspondingly, the SMF receives the session request message from the first AMF. In this case, the SMF may obtain the first user identifier included in the session request message.

Manner 3: The SMF receives an extensible authentication protocol (extensible authentication protocol, EAP) response message from the terminal device, where the EAP response message includes the first user identifier.

In a specific implementation, if the SMF does not receive the first user identifier in an uplink PDU session establishment request message from the terminal device or a session request message from the first AMF, the SMF may send an EAP request message (namely, EAP-Request/identity()) to the terminal device after initiating a secondary authentication procedure for a PDU session of the DNN, to request the first user identifier entered by the user on the terminal device. Correspondingly, after receiving the EAP request message, the terminal device returns an EAP response message (namely, EAP-Response/identity()) to the SMF, where the EAP response message includes the first user identifier. In this case, the SMF receives the EAP response message from the terminal device, and may obtain the first user identifier included in the EAP response message.

In a possible implementation, a specific implementation in which the SMF obtains the first subscription data of the terminal device may be as follows: The SMF sends a sixth message (for example, an SM subscription() message) to a UDM, where the sixth message is used to request the first subscription data of the terminal device. Correspondingly, the UDM receives the sixth message from the SMF. The UDM sends the first subscription data of the terminal device to the SMF. Correspondingly, the SMF receives the first subscription data of the terminal device from the UDM. In this case, the first subscription data includes the binding relationship between the fourth identifier of the terminal device and the second identifier (for example, the identifier of the cloud terminal device (cloud UE, C-UE)). Optionally, the SMF further obtains, from the UDM, subscription data corresponding to the DNN and/or slice, where the subscription data corresponding to the DNN and/or slice includes a secondary authentication indication.

In a possible implementation, before the SMF determines, based on the first subscription data, that the first identifier is allowed to access the network, the method further includes the following steps s11 to s13. This manner helps improve data communication security.

s11: The SMF sends a first authentication and authorization request message to the server. Correspondingly, the server receives the first authentication and authorization request message from the SMF.

In a specific implementation, the first authentication and authorization request message includes the first identifier and/or the fourth identifier of the terminal device. The fourth identifier of the terminal device herein may be the permanent identifier (SUPI) of the terminal device, the external identifier (GPSI) of the terminal device, or the like. The SMF initiates a secondary authentication procedure for a PDU session of the DNN based on the subscription data corresponding to the DNN and/or slice or according to a local policy. In this case, the SMF needs to send the first authentication and authorization request message to the server. The server herein may be an authentication, authorization, and accounting (authentication, authorization, and accounting, AAA) server corresponding to a DN network, and is configured to perform authentication and authorization on the first identifier. For example, the DN-AAA server is an application server of the cloud phone application.

s12: The server determines second subscription data corresponding to the first identifier.

In a specific implementation, the server stores the second subscription data corresponding to the first identifier, and the second subscription data includes the first identifier and a third identifier of the terminal device. The third identifier of the terminal device herein is an identifier of the terminal device bound to the first identifier in the second subscription data. The server may find the second subscription data based on the first identifier and/or the fourth identifier of the terminal device that are/is obtained from the SMF. For example, the server may directly find the second subscription data based on the first identifier; or may determine whether the third identifier of the terminal device matches the fourth identifier of the terminal device, and if the third identifier of the terminal device matches the fourth identifier of the terminal device, the server may find subscription data corresponding to the third identifier of the terminal device. Because the third identifier of the terminal device is bound to the first identifier, the subscription data corresponding to the third identifier is the second subscription data corresponding to the first identifier.

s13: When the authentication and authorization on the first identifier succeeds, the server sends a response to the first authentication and authorization request to the SMF. Correspondingly, the SMF receives the response to the first authentication and authorization request from the server.

In a specific implementation, the response to the first authentication and authorization request includes the first identifier. The server further establishes a connection to the terminal device, and obtains a password corresponding to the first identifier (for example, the first user identifier) or another security-related parameter. The server may compare the first identifier with the obtained password. When the first identifier matches the obtained password, the server considers that the first identifier is an authorized user, in other words, considers that the authentication and authorization on the first identifier succeeds, and may send the response to the first authentication and authorization request to the SMF. Certainly, the server may alternatively perform authentication and authorization on the first identifier according to another authentication and authorization solution. This is not limited in this application. Optionally, the response to the first authentication and authorization request may further include an EAP success message. The EAP success message and the first identifier may be encapsulated in an authentication authorization message and sent to the SMF. For the first identifier that fails to be authenticated and authorized, the server may send an EAP failure message to the SMF.

Optionally, when the server sends the response to the first authentication and authorization request to the SMF, a specific implementation may be as follows: The server determines, based on the second subscription data, that the first identifier is allowed to access the network through the terminal device, and sends the response to the first authentication and authorization request to the SMF. Further, optionally, when the server determines, based on the second subscription data, that the first identifier is allowed to access the network through the terminal device, a specific implementation may be as follows: When the fourth identifier of the terminal device matches the third identifier of the terminal device included in the second subscription data, the server allows the first identifier to access the network through the terminal device.

It may be understood that before sending the response to the first authentication and authorization request to the SMF, in addition to performing authentication and authorization on the first identifier, the server may determine, based on the second subscription data, whether the first identifier is allowed to access the network through the terminal device. Specifically, the server may determine whether the fourth identifier that is of the terminal device and that is sent by the SMF matches the third identifier of the bound terminal device that is bound in the second subscription data. When the fourth identifier of the terminal device matches the third identifier of the terminal device included in the second subscription data, the server may allow the first identifier to access the network through the terminal device. If the fourth identifier of the terminal device does not match the third identifier of the terminal device included in the second subscription data, the server does not allow the first identifier to access the network through the terminal device. This helps ensure communication security.

In a possible implementation, the second identifier may include the at least one user identifier whose access is allowed or the first indication information. The first indication information herein indicates that any user identifier is allowed to access the network through the terminal device. Before determining, based on the first subscription data, that the first identifier is allowed to access the network, specifically, before sending the first authentication and authorization request message to the server, the SMF needs to determine whether the first user identifier entered by the user on the terminal device is allowed to access the network. This manner helps improve security of a cloud phone account. The following describes the two cases in detail.

Case 1: The first identifier includes the first user identifier, and the second identifier includes the at least one user identifier whose access is allowed. Before the SMF determines, based on the first subscription data, that the first identifier is allowed to access the network, the method further includes: When the first user identifier matches the at least one user identifier included in the first subscription data, the SMF allows the first user identifier to access the network.

In a specific implementation, before determining, based on the first subscription data, that the first identifier is allowed to access the network, the SMF needs to determine whether the first user identifier entered by the user on the terminal device is allowed to access the network. The second identifier in the first subscription data includes the at least one user identifier whose access is allowed. When the first user identifier matches the at least one user identifier included in the first subscription data, it indicates that the first user identifier is an authorized user identifier, and the SMF allows the first user identifier to access the network. If the first user identifier does not match the at least one user identifier included in the first subscription data, it indicates that the first user identifier is not an authorized user identifier, and the SMF does not allow the first user identifier to access the network. This manner helps improve the security of the cloud phone account.

For example, the at least one user identifier included in the first subscription data is 111 and 222. If the first user identifier is 111, the at least one user identifier has an identifier that matches the first user identifier. In this case, the SMF allows the first user identifier to access the network. If the first user identifier is 333, the at least one user identifier has no identifier that matches the first user identifier. In this case, the SMF does not allow the first user identifier to access the network.

Case 2: The first identifier includes the first user identifier, and the second identifier includes the first indication information. Before the SMF determines, based on the first subscription data, that the first identifier is allowed to access the network, the method further includes: When the first subscription data includes the first indication information, the SMF allows the first user identifier to access the network.

In a specific implementation, before determining, based on the first subscription data, that the first identifier is allowed to access the network, the SMF needs to determine whether the first user identifier entered by the user on the terminal device is allowed to access the network. The second identifier in the first subscription data includes the first indication information. When the first subscription data includes the first indication information, it means that any user identifier is allowed to access the network through the terminal device. Therefore, the SMF may allow the first user identifier to access the network.

S602: The SMF determines, based on the first subscription data, that the first identifier is allowed to access the network, and sends a first message to the server. Correspondingly, the server receives the first message from the SMF.

In this embodiment of this application, the first message includes an identifier of the first AMF and/or a temporary identifier of the terminal device. The temporary identifier of the terminal device is a temporary identifier, namely, a 5G-globally unique temporary UE identity (5G-globally unique temporary UE identity, 5G-GUTI), allocated by the first AMF to the terminal device after the terminal device registers with the 5GC. The temporary identifier of the terminal device includes the identifier of the first AMF. The identifier of the first AMF herein is an identifier of an AMF connected to the terminal device, for example, a fully qualified domain name (fully qualified domain name, FQDN) of the first AMF or an IP address of the first AMF.

Optionally, the SMF may obtain session policy information from the PCF. Correspondingly, the PCF sends a related policy control and charging (policy control and charging, PCC) rule to the SMF, where the rule includes a quality of service (quality of service, QoS) policy.

Optionally, the SMF may forward, to the terminal device, the EAP success message or the EAP failure message obtained from the server.

In a possible implementation, the first subscription data includes the bound second identifier; and when the SMF determines, based on the first subscription data, that the first identifier is allowed to access the network, a specific implementation may be as follows: When the first identifier matches the second identifier included in the first subscription data, the SMF allows the first identifier to access the network. It may be understood that before sending the first message to the server, the SMF also needs to determine whether the first identifier (for example, the C-UE SUPI/GPSI/User ID) is allowed to access the network. Specifically, the SMF needs to determine whether the first identifier matches the bound second identifier in the first subscription data. When the first identifier matches the second identifier included in the first subscription data, the SMF may allow the first identifier to access the network. If the first identifier does not match the bound second identifier in the first subscription data, the SMF does not allow the first identifier to access the network.

In a possible implementation, the first message further includes first success indication information, and the first success indication information indicates that the first identifier is allowed to access the network. It may be understood that after determining, based on the first subscription data, that the first identifier is allowed to access the network, the SMF may include the first success indication information in the first message in addition to the identifier of the first AMF and/or the temporary identifier of the terminal device, to notify the server that the SMF allows the first identifier to access the network. Certainly, if the SMF determines, based on the first subscription data, that the first identifier is not allowed to access the network, the first message may carry first rejection indication information, to notify the server that the SMF does not allow the first identifier to access the network.

S603: The server sends a first registration request message to the first AMF. Correspondingly, the first AMF receives the first registration request message from the server.

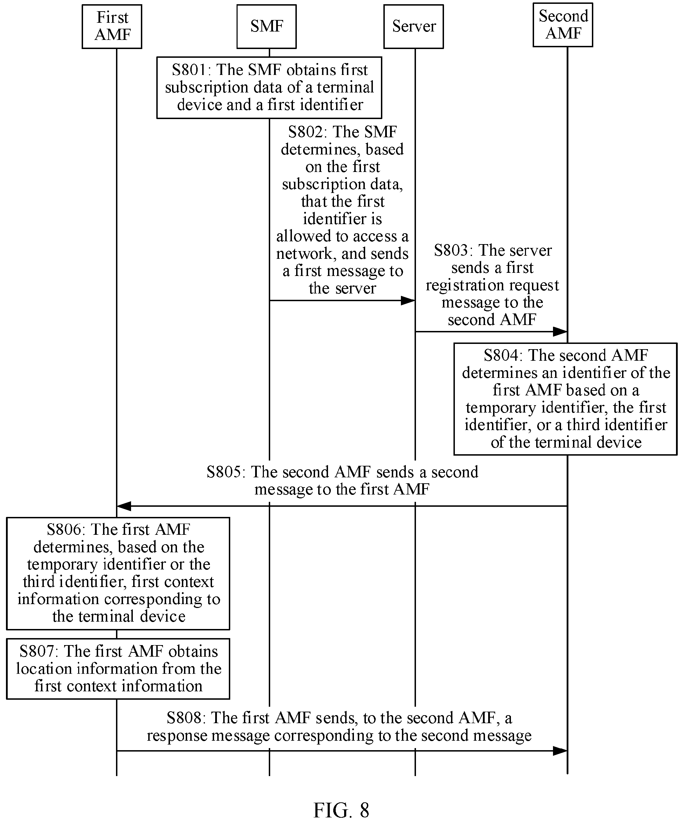

In this embodiment of this application, the first registration request message includes the first identifier and/or the temporary identifier. After receiving the first message from the SMF, the server may initiate a registration procedure to the first AMF as a virtual terminal device. Specifically, the server may establish a connection to the first AMF based on the identifier of the first AMF and/or the temporary identifier of the terminal device in the first message received from the SMF. In this case, two cases may occur: (1) The server can be connected to the first AMF. (2) The server cannot be connected to the first AMF. For example, when the first AMF is overloaded and cannot receive a new connection, the server may select another AMF for connection. In this embodiment of this application, the case (1) (to be specific, the server can be connected to the first AMF) is used for description. In this case, the server sends the first registration request message to the first AMF. For the case (2), refer to the following descriptions in FIG. 8. Details are not described herein again.

Optionally, the first registration request message may further include the third identifier of the terminal device. It may be understood that the server stores the second subscription data corresponding to the first identifier, the third identifier of the terminal device is bound in the second subscription data, and the third identifier of the terminal device may be carried in the first registration request message.

S604: The first AMF determines, based on the temporary identifier or the third identifier of the terminal device, first context information corresponding to the terminal device.

In this embodiment of this application, the first AMF parses the received first registration request message to obtain the temporary identifier and/or the third identifier of the terminal device. The first AMF may find, based on the temporary identifier or the third identifier of the terminal device, the first context information corresponding to the terminal device. Location information of the terminal device is stored in the first context information corresponding to the terminal device.

In a possible implementation, the first registration request message includes the first identifier; and before the first AMF determines, based on the temporary identifier or the third identifier of the terminal device, the first context information corresponding to the terminal device, the method further includes: obtaining the second subscription data corresponding to the first identifier, where the second subscription data includes the third identifier of the terminal device and/or the temporary identifier. It may be understood that if the first registration request message does not include the temporary identifier and/or the third identifier of the terminal device, the first AMF may obtain, from the UDM based on the first identifier, the second subscription data corresponding to the first identifier, where the second subscription data includes the third identifier of the terminal device and/or the temporary identifier.

S605: The first AMF obtains the location information of the terminal device from the first context information.

In a possible implementation, the method further includes: The first AMF creates second context information corresponding to the first identifier; and the first AMF stores the location information in the second context information. It may be understood that the first AMF may create the second context information corresponding to the first identifier, and then store the location information of the terminal device as location information of the first identifier (namely, location information of the cloud terminal device) in the second context information corresponding to the first identifier. In this case, the first AMF obtains the location information of the first identifier (namely, the location information of the cloud terminal device).

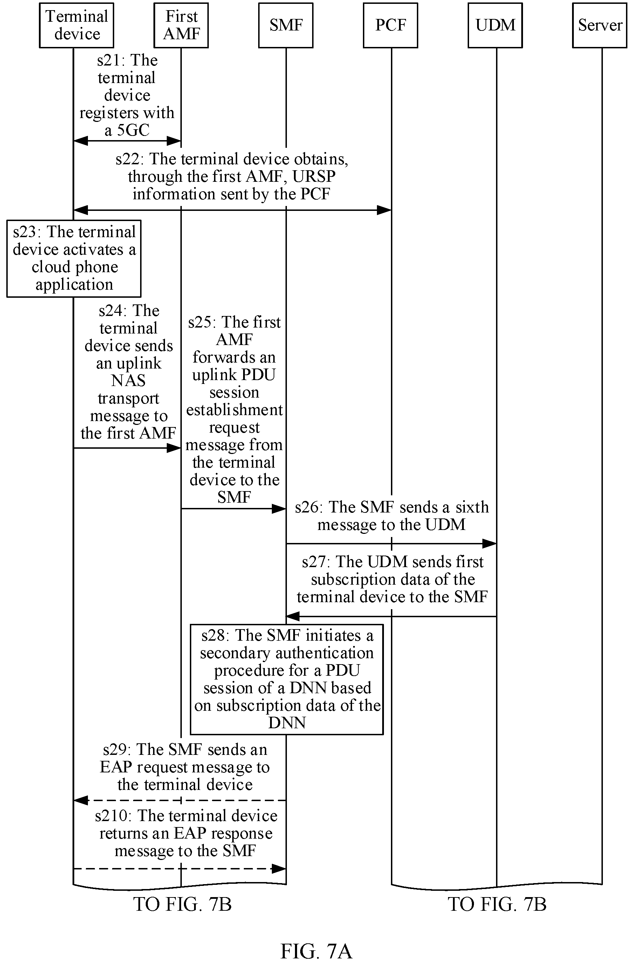

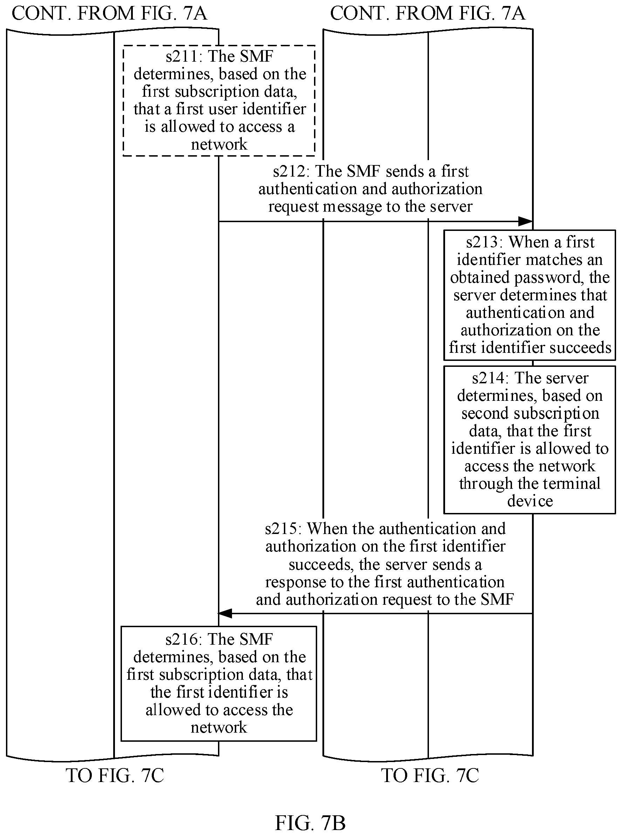

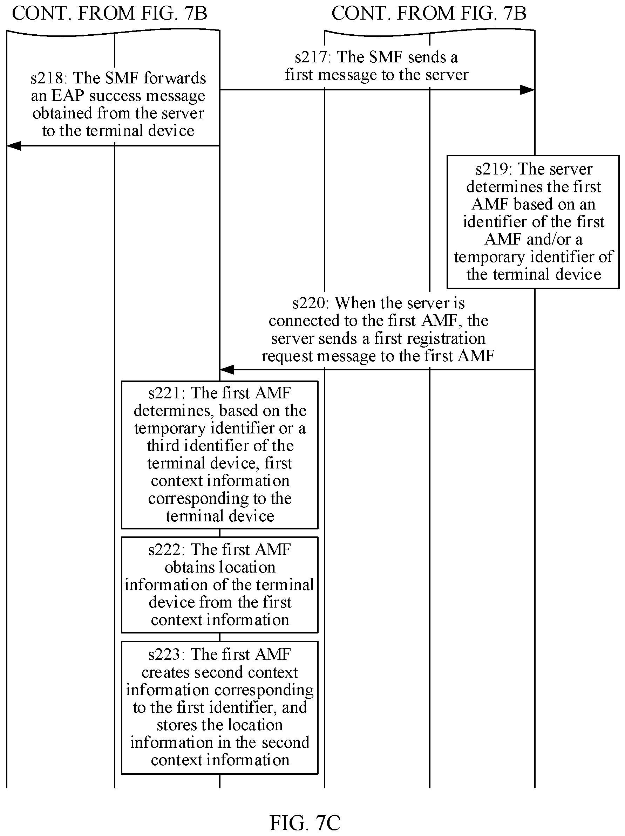

Based on the foregoing descriptions, the following uses a complete example for description. As shown in FIG. 7A to FIG. 7C, in a scenario of a cloud phone application, the communication method may include the following steps s21 to s223. Steps s29 to s211 are optional steps.

s21: A terminal device registers with a 5GC.

s22: The terminal device obtains, through a first AMF, URSP information sent by a PCF.

The URSP information includes an application identifier (namely, an identifier of the cloud phone application), and a DNN and/or slice information that correspond/corresponds to the cloud phone application.

s23: The terminal device activates the cloud phone application.

For example, a user starts the cloud phone application on the terminal device, and enters a user account (namely, a first user identifier) and a password.

s24: The terminal device sends an uplink NAS transport message to the first AMF. Correspondingly, the first AMF receives the uplink NAS transport message from the terminal device.

The uplink NAS transport message includes an uplink PDU session establishment request message and at least one of the DNN and the slice information. The uplink PDU session establishment request message includes the first user identifier.

s25: The first AMF forwards the uplink PDU session establishment request message from the terminal device to an SMF.

s26: The SMF sends a sixth message to a UDM. Correspondingly, the UDM receives the sixth message from the SMF.

The sixth message may be an SM subscription() message, and the sixth message is used to request first subscription data of the terminal device. The first subscription data of the terminal device includes a fourth identifier of the terminal device and a second identifier bound to the terminal device.

s27: The UDM sends the first subscription data of the terminal device to the SMF. Correspondingly, the SMF receives the first subscription data of the terminal device from the UDM.

s28: The SMF initiates a secondary authentication procedure for a PDU session of the DNN based on subscription data of the DNN.

Optionally, if the SMF does not receive the first user identifier in the uplink PDU session establishment request message from the terminal device or a session request message from the first AMF, the SMF may send an EAP request message (namely, EAP-Request/identity()) to the terminal device, to request the first user identifier entered by the user on the terminal device. Specifically, the following steps s29 and s210 may be used.

s29: The SMF sends the EAP request message to the terminal device. Correspondingly, the terminal device receives the EAP request message from the SMF.

s210: The terminal device returns an EAP response message to the SMF. Correspondingly, the SMF receives the EAP response message from the terminal device.

The EAP response message includes the first user identifier.

Optionally, in s211, the SMF determines, based on the first subscription data, that the first user identifier is allowed to access a network.

It may be understood that before sending a first authentication and authorization request message to a server, the SMF needs to determine whether the first user identifier entered by the user on the terminal device is allowed to access the network. Steps s212 to s223 can be performed only when the SMF determines, based on the first subscription data, that the first user identifier is allowed to access the network. For a specific implementation, refer to the descriptions of step S601. Details are not described herein again.

s212: The SMF sends the first authentication and authorization request message to the server. Correspondingly, the server receives the first authentication and authorization request message from the SMF.

The first authentication and authorization request message includes a first identifier and/or the fourth identifier of the terminal device.

s213: When the first identifier matches an obtained password, the server determines that authentication and authorization on the first identifier succeeds.

s214: The server determines, based on second subscription data, that the first identifier is allowed to access the network through the terminal device.

s215: When the authentication and authorization on the first identifier succeeds, the server sends a response to the first authentication and authorization request to the SMF. Correspondingly, the SMF receives the response to the first authentication and authorization request from the server.

The response to the first authentication and authorization request includes the first identifier. For specific implementations of steps s212 to s215, refer to the descriptions of the foregoing steps s11 to s13. Details are not described herein again.

s216: The SMF determines, based on the first subscription data, that the first identifier is allowed to access the network.

s217: The SMF sends a first message to the server. Correspondingly, the server receives the first message from the SMF.

The first message includes an identifier of the first AMF and/or a temporary identifier of the terminal device. Optionally, the first message further includes the first identifier and/or first success indication information. For specific implementations of steps s216 and s217, refer to the descriptions of step S602. Details are not described herein again.

s218: The SMF forwards an EAP success message obtained from the server to the terminal device.

s219: The server determines the first AMF based on the identifier of the first AMF and/or the temporary identifier of the terminal device.

s220: When the server is connected to the first AMF, the server sends a first registration request message to the first AMF. Correspondingly, the first AMF receives the first registration request message from the server.

The first registration request message includes the first identifier and/or the temporary identifier.

s221: The first AMF determines, based on the temporary identifier or a third identifier of the terminal device, first context information corresponding to the terminal device.

s222: The first AMF obtains location information of the terminal device from the first context information.

s223: The first AMF creates second context information corresponding to the first identifier, and stores the location information in the second context information.

For specific implementations of steps s219 to s223, refer to the descriptions of steps S603 to S605. Details are not described herein again.

It can be learned that, according to the method described in FIG. 6, for a scenario of a cloud phone application, when a cloud phone server initiates a registration procedure to a core network as virtual user equipment, it can be ensured that the core network obtains location information of a user who logs in to a cloud phone account; in addition, a binding relationship between the cloud phone account and a mobile phone identifier is supported, and security of the cloud phone account is improved.

FIG. 8 is a schematic flowchart of another communication method according to an embodiment of this application. As shown in FIG. 8, the communication method includes the following steps S801 to S808. The method shown in FIG. 8 may be performed by the first AMF, the second AMF, the SMF, and the server that are mentioned above. Alternatively, the method shown in FIG. 8 may be performed by a device or a chip having the first AMF, the second AMF, the SMF, and the server. This is not limited in this embodiment of this application. FIG. 8 is described by using an example in which the method is performed by the first AMF, the second AMF, the SMF, and the server. The server herein may include a function of a second access network device (in other words, the server and the second access network device are deployed on a same platform). The first AMF is different from the second AMF.

S801: The SMF obtains first subscription data of a terminal device and a first identifier.

S802: The SMF determines, based on the first subscription data, that the first identifier is allowed to access a network, and sends a first message to the server. Correspondingly, the server receives the first message from the SMF.

The first message includes an identifier of the first AMF and/or a temporary identifier of the terminal device. For specific implementations of steps S801 and S802, refer to the foregoing descriptions of steps S601 and S602. Details are not described herein again.

S803: The server sends a first registration request message to the second AMF. Correspondingly, the second AMF receives the first registration request message from the server.

In this embodiment of this application, the first registration request message includes the first identifier and/or the temporary identifier. After receiving the first message from the SMF, the server may initiate a registration procedure to the first AMF as a virtual terminal device. Specifically, the server may establish a connection to the first AMF based on the identifier of the first AMF and/or the temporary identifier of the terminal device in the first message received from the SMF. In this case, two cases may occur: (1) The server can be connected to the first AMF. (2) The server cannot be connected to the first AMF. For example, when the first AMF is overloaded and cannot receive a new connection, the server may select another AMF for connection. In this embodiment of this application, the case (2) (to be specific, the server cannot be connected to the first AMF) is used for description. In this case, the server sends the first registration request message to the second AMF. For the case (1), refer to the foregoing descriptions in FIG. 6. Details are not described herein again.

Optionally, the first registration request message may further include a third identifier of the terminal device. It may be understood that the server stores second subscription data corresponding to the first identifier, the third identifier of the terminal device is bound in the second subscription data, and the third identifier of the terminal device may be carried in the first registration request message.

S804: The second AMF determines the identifier of the first AMF based on the temporary identifier, the first identifier, or the third identifier of the terminal device.

In this embodiment of this application, the second AMF may determine, based on subscription data corresponding to the third identifier of the terminal device, the identifier of the first AMF connected to the terminal device; because the temporary identifier of the terminal device includes the identifier of the first AMF, the second AMF may determine the identifier of the first AMF based on the temporary identifier of the terminal device; or the second AMF may obtain the second subscription data corresponding to the first identifier, where the second subscription data includes information about the first AMF, and determine the identifier of the first AMF based on the information about the first AMF.

In a possible implementation, the first registration request message includes the first identifier; and before the second AMF determines the identifier of the first AMF based on the temporary identifier, the first identifier, or the third identifier of the terminal device, the method further includes: obtaining the second subscription data corresponding to the first identifier, where the second subscription data includes the third identifier of the terminal device and/or the temporary identifier. It may be understood that if the first registration request message does not include the temporary identifier and/or the third identifier of the terminal device, the first AMF may obtain, from a UDM based on the first identifier, the second subscription data corresponding to the first identifier, where the second subscription data includes the third identifier of the terminal device and/or the temporary identifier.

The following describes in detail several manners in which the second AMF determines the identifier of the first AMF based on the temporary identifier, the first identifier, or the third identifier of the terminal device. This manner helps improve flexibility of determining the identifier of the first AMF.

Manner 1: The second AMF determines the identifier of the first AMF based on the temporary identifier.

In a specific implementation, the temporary identifier (namely, a 5G-GUTI) of the terminal device includes the identifier of the first AMF, and the second AMF may directly determine the identifier of the first AMF from the temporary identifier.

Manner 2: The second AMF determines the identifier of the first AMF based on the third identifier of the terminal device.

In a specific implementation, when the second AMF determines the identifier of the first AMF based on the third identifier of the terminal device, a specific implementation may be as follows: The second AMF obtains the information that is about the first AMF and that is included in the subscription data corresponding to the third identifier of the terminal device. The information about the first AMF includes at least one of the following information: the identifier of the first AMF or an IP address of the first AMF.

Specifically, the second AMF sends a request message to the UDM, where the request message includes the third identifier of the terminal device. The UDM searches, based on the third identifier, for the subscription data corresponding to the third identifier, where the subscription data corresponding to the third identifier includes the information about the first AMF. The UDM sends the information about the first AMF to the second AMF, where the information about the first AMF includes the identifier of the first AMF.

Manner 3: The second AMF determines the identifier of the first AMF based on the first identifier.

In a specific implementation, the first registration request message includes the first identifier; and when the second AMF determines the identifier of the first AMF based on the first identifier, a specific implementation may be as follows: The second AMF obtains the second subscription data corresponding to the first identifier, where the second subscription data includes the information about the first AMF. The information about the first AMF includes at least one of the following information: the identifier of the first AMF or an IP address of the first AMF.

Specifically, the UDM may directly obtain the information about the first AMF from the subscription data corresponding to the third identifier of the terminal device, and may include the information about the first AMF in the second subscription data corresponding to the first identifier. In this way, when the second AMF obtains, from the UDM, the second subscription data corresponding to the first identifier, the second AMF may naturally obtain the information that is about the first AMF and that is included in the second subscription data, where the information about the first AMF includes the identifier of the first AMF.

S805: The second AMF sends a second message to the first AMF. Correspondingly, the first AMF receives the second message from the second AMF.

In this embodiment of this application, the second message is used to request location information of the terminal device, and the second message includes at least one of the following information: the temporary identifier or the third identifier of the terminal device.

S806: The first AMF determines, based on the temporary identifier or the third identifier, first context information corresponding to the terminal device.

In this embodiment of this application, after receiving the second message from the second AMF, the first AMF may find, based on the temporary identifier or the third identifier of the terminal device, the first context information corresponding to the terminal device. The location information of the terminal device is stored in the first context information corresponding to the terminal device.

S807: The first AMF obtains the location information from the first context information.

S808: The first AMF sends, to the second AMF, a response message corresponding to the second message. Correspondingly, the second AMF receives, from the first AMF, the response message corresponding to the second message.

In this embodiment of this application, after obtaining the location information from the first context information, the first AMF sends, to the second AMF, the response message corresponding to the second message, where the response message corresponding to the second message includes the location information.

In a possible implementation, the method further includes: The second AMF creates second context information corresponding to the first identifier; and the second AMF stores the location information in the second context information. It may be understood that after obtaining the location information of the terminal device, the second AMF may create the second context information corresponding to the first identifier, and then store the location information of the terminal device as location information of the first identifier (namely, location information of a cloud terminal device) in the second context information corresponding to the first identifier. In this case, the second AMF obtains the location information of the first identifier (namely, the location information of the cloud terminal device).

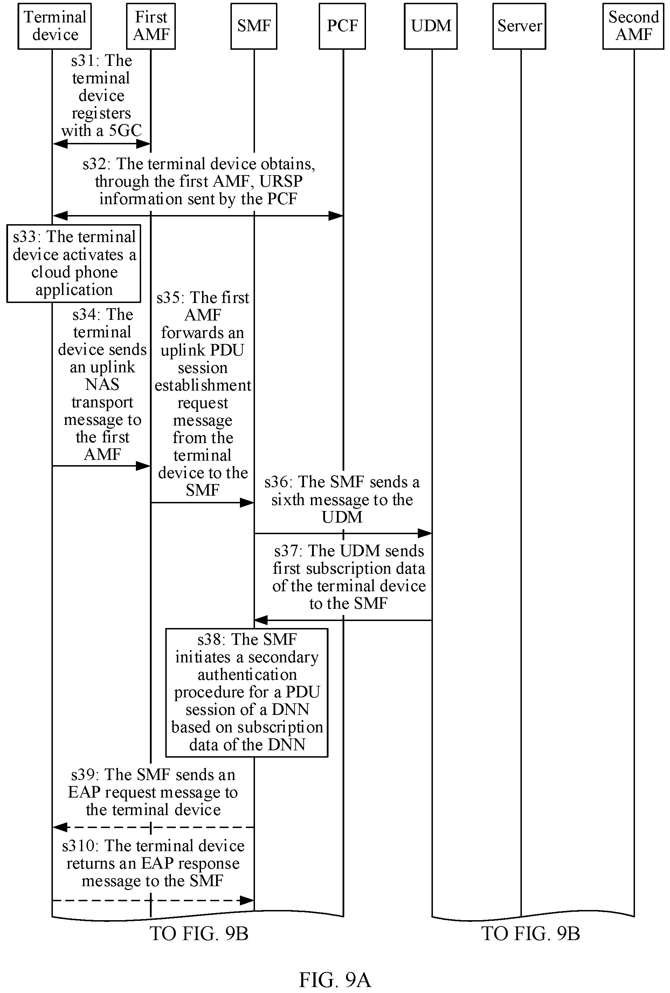

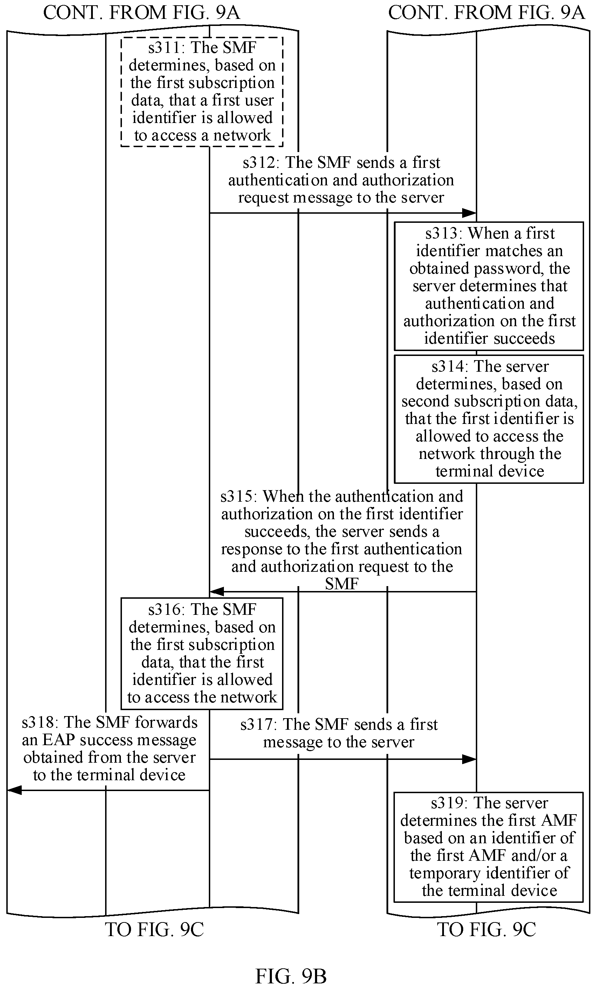

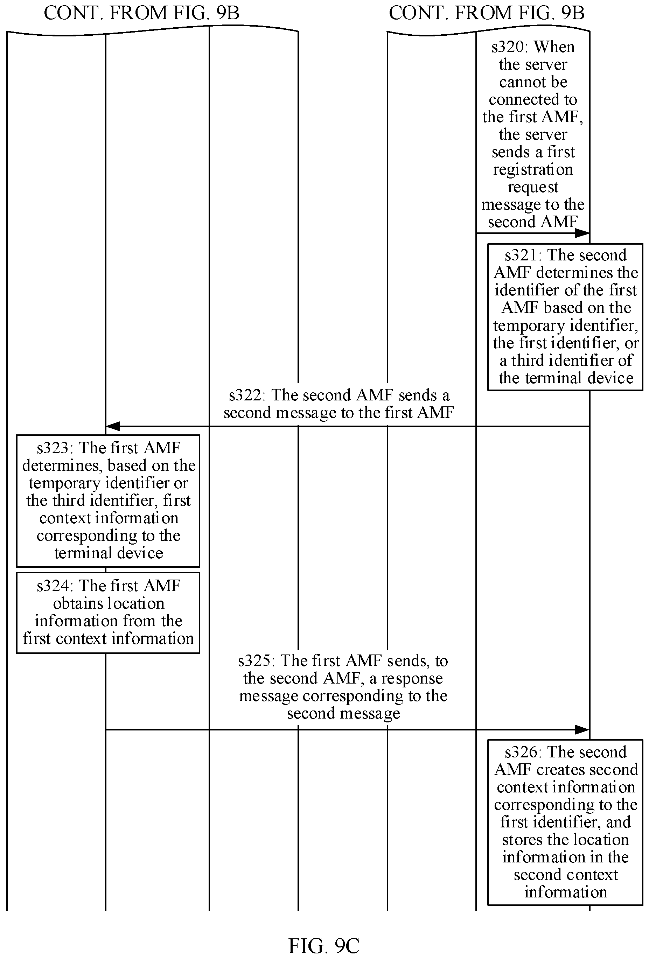

Based on the foregoing descriptions, the following uses a complete example for description. As shown in FIG. 9A to FIG. 9C, in a scenario of a cloud phone application, the communication method may include the following steps s31 to s326. Steps s39 to s311 are optional steps.

s31: A terminal device registers with a 5GC.

s32: The terminal device obtains, through a first AMF, URSP information sent by a PCF.

The URSP information includes an application identifier (namely, an identifier of the cloud phone application), and a DNN and/or slice information that correspond/corresponds to the cloud phone application.

s33: The terminal device activates the cloud phone application.

For example, a user starts the cloud phone application on the terminal device, and enters a user account (namely, a first user identifier) and a password.

s34: The terminal device sends an uplink NAS transport message to the first AMF. Correspondingly, the first AMF receives the uplink NAS transport message from the terminal device.

The uplink NAS transport message includes an uplink PDU session establishment request message and at least one of the DNN and the slice information. The uplink PDU session establishment request message includes the first user identifier.

s35: The first AMF forwards the uplink PDU session establishment request message from the terminal device to an SMF.

s36: The SMF sends a sixth message to a UDM. Correspondingly, the UDM receives the sixth message from the SMF.

The sixth message may be an SM subscription() message, and the sixth message is used to request first subscription data of the terminal device. The first subscription data of the terminal device includes a fourth identifier of the terminal device and a second identifier bound to the terminal device.

s37: The UDM sends the first subscription data of the terminal device to the SMF. Correspondingly, the SMF receives the first subscription data of the terminal device from the UDM.

s38: The SMF initiates a secondary authentication procedure for a PDU session of the DNN based on subscription data of the DNN.

Optionally, if the SMF does not receive the first user identifier in the uplink PDU session establishment request message from the terminal device or a session request message from the first AMF, the SMF may send an EAP request message (namely, EAP-Request/identity()) to the terminal device, to request the first user identifier entered by the user on the terminal device. Specifically, the following steps s39 and s310 may be used.

s39: The SMF sends the EAP request message to the terminal device. Correspondingly, the terminal device receives the EAP request message from the SMF.

s310: The terminal device returns an EAP response message to the SMF. Correspondingly, the SMF receives the EAP response message from the terminal device.

The EAP response message includes the first user identifier.

Optionally, in s311, the SMF determines, based on the first subscription data, that the first user identifier is allowed to access a network.

It may be understood that before sending a first authentication and authorization request message to a server, the SMF needs to determine whether the first user identifier entered by the user on the terminal device is allowed to access the network. Steps s312 to s326 can be performed only when the SMF determines, based on the first subscription data, that the first user identifier is allowed to access the network. For a specific implementation, refer to the descriptions of step S601. Details are not described herein again.

s312: The SMF sends the first authentication and authorization request message to the server. Correspondingly, the server receives the first authentication and authorization request message from the SMF.

The first authentication and authorization request message includes a first identifier and/or the fourth identifier of the terminal device.

s313: When the first identifier matches an obtained password, the server determines that authentication and authorization on the first identifier succeeds.

s314: The server determines, based on second subscription data, that the first identifier is allowed to access the network through the terminal device.

s315: When the authentication and authorization on the first identifier succeeds, the server sends a response to the first authentication and authorization request to the SMF. Correspondingly, the SMF receives the response to the first authentication and authorization request from the server.

The response to the first authentication and authorization request includes the first identifier. For specific implementations of steps s312 to s315, refer to the descriptions of the foregoing steps s11 to s13. Details are not described herein again.

s316: The SMF determines, based on the first subscription data, that the first identifier is allowed to access the network.

s317: The SMF sends a first message to the server. Correspondingly, the server receives the first message from the SMF.

The first message includes an identifier of the first AMF and/or a temporary identifier of the terminal device. Optionally, the first message further includes the first identifier and/or first success indication information. For specific implementations of steps s316 and s317, refer to the descriptions of step S602. Details are not described herein again.

s318: The SMF forwards an EAP success message obtained from the server to the terminal device.

s319: The server determines the first AMF based on the identifier of the first AMF and/or the temporary identifier of the terminal device.

s320: When the server cannot be connected to the first AMF, the server sends a first registration request message to the second AMF. Correspondingly, the second AMF receives the first registration request message from the server.

The first registration request message includes the first identifier and/or the temporary identifier.

s321: The second AMF determines the identifier of the first AMF based on the temporary identifier, the first identifier, or a third identifier of the terminal device.

s322: The second AMF sends a second message to the first AMF. Correspondingly, the first AMF receives the second message from the second AMF.

s323: The first AMF determines, based on the temporary identifier or the third identifier, first context information corresponding to the terminal device.

s324: The first AMF obtains location information from the first context information.

s325: The first AMF sends, to the second AMF, a response message corresponding to the second message. Correspondingly, the second AMF receives, from the first AMF, the response message corresponding to the second message.

The response message corresponding to the second message includes the location information.

s326: The second AMF creates second context information corresponding to the first identifier, and stores the location information in the second context information.

For specific implementations of steps s319 to s326, refer to the descriptions of steps S803 to S808. Details are not described herein again.

It can be learned that, according to the method described in FIG. 8, for a scenario of a cloud phone application, when a cloud phone server initiates a registration procedure to a core network as virtual user equipment, it can be ensured that the core network obtains location information of a user who logs in to a cloud phone account; in addition, a binding relationship between the cloud phone account and a mobile phone identifier is supported, and security of the cloud phone account is improved.

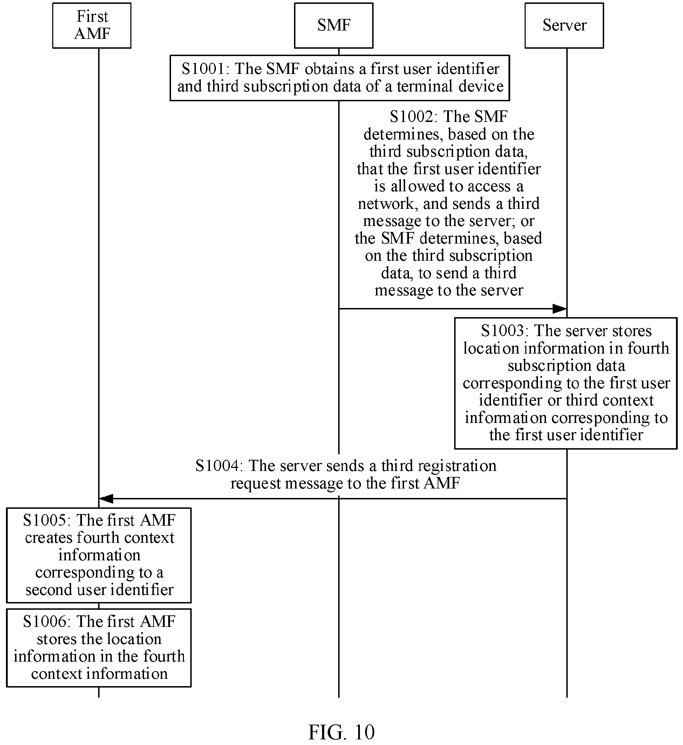

FIG. 10 is a schematic flowchart of another communication method according to an embodiment of this application. As shown in FIG. 10, the communication method includes the following steps S1001 to S1006. The method shown in FIG. 10 may be performed by the first AMF, the SMF, and the server that are mentioned above. Alternatively, the method shown in FIG. 10 may be performed by a device or a chip having the first AMF, the SMF, and the server. This is not limited in this embodiment of this application. FIG. 10 is described by using an example in which the method is performed by the first AMF, the SMF, and the server. The server herein may include a function of a second access network device (in other words, the server and the second access network device are deployed on a same platform).

S1001: The SMF obtains a first user identifier and third subscription data of a terminal device.

In this embodiment of this application, the third subscription data of the terminal device may be for establishing a binding relationship between a fourth identifier of the terminal device and a user identifier, in other words, the third subscription data may include the fourth identifier of the terminal device and the user identifier bound to the terminal device.

The fourth identifier of the terminal device may be a permanent identifier (SUPI) of the terminal device, an external identifier (GPSI) of the terminal device, or the like. The user identifier bound to the terminal device may be at least one user identifier (for example, a user account of a cloud phone application, namely, a User ID) whose access is allowed, first indication information (where the first indication information indicates that any user identifier is allowed to access a network through the terminal device, that is, any User indication), or the like. The first user identifier herein is a user identifier entered by a user on the terminal device. Optionally, the user identifier bound to the terminal device may be further bound to a DNN or slice information, to indicate the user identifier bound to the terminal device when the terminal device accesses the DNN or the slice information.

The cloud phone application is an application in the server. The following uses the cloud phone application as an example for description. The cloud phone application may be replaced with any other application. The terminal device may establish a connection to the server corresponding to the cloud phone application, and initiate a registration procedure to a core network by using the server corresponding to the cloud phone application as virtual user equipment. Subsequently, the user may control the server through a user interface of the terminal device, and perform various service operations to obtain corresponding services, to avoid dependence on hardware resources of the terminal device. For example, the terminal device is a mobile phone and the application is a cloud phone application. Third subscription data of the mobile phone may include a binding relationship between a mobile phone identifier and a user account of the cloud phone application.

In a possible implementation, a specific implementation in which the SMF obtains the first user identifier may be any one of the following three manners.

Manner 1: The SMF receives an uplink PDU session establishment request message from the terminal device, where the uplink PDU session establishment request message includes the first user identifier.

In a specific implementation, after the terminal device registers with a 5GC, the terminal device may obtain, through the first AMF, URSP information sent by a PCF. The URSP information includes an application identifier (for example, an identifier of the cloud phone application), and a DNN and/or slice information that correspond/corresponds to the cloud phone application. The user activates the cloud phone application on the terminal device, for example, starts the cloud phone application, and enters the user account (namely, the first user identifier) and a password. The terminal device obtains, based on the URSP information, the DNN and/or the slice information that correspond/corresponds to the cloud phone application. The terminal device initiates a PDU session establishment procedure to the DNN and/or the slice information. To be specific, the terminal device sends a UL NAS transport message to the first AMF. The UL NAS transport message includes an uplink PDU session establishment request message, and at least one of the DNN and the slice information. After obtaining the first user identifier entered by the user, the terminal device includes the first user identifier in the uplink PDU session establishment request message. Correspondingly, the first AMF receives and processes the UL NAS transport message, and continues to forward the uplink PDU session establishment request message, the DNN, and/or the slice information from the terminal device to the SMF. The uplink PDU session establishment request message includes the first user identifier. Correspondingly, the SMF receives the uplink PDU session establishment request message from the terminal device. In this case, the SMF may obtain the first user identifier included in the uplink PDU session establishment request message.

Manner 2: The SMF receives a session request message from the first AMF, where the session request message includes the first user identifier.

In a specific implementation, after the terminal device registers with a 5GC, the terminal device may obtain, through the first AMF, URSP information sent by a PCF. The URSP information includes an application identifier (for example, an identifier of the cloud phone application), and a DNN and/or slice information that correspond/corresponds to the cloud phone application. The user activates the cloud phone application on the terminal device, for example, starts the cloud phone application, and enters the user account (namely, the first user identifier) and a password. The terminal device obtains, based on the URSP information, the DNN and/or the slice information that correspond/corresponds to the cloud phone application. The terminal device initiates a PDU session establishment procedure to the DNN and/or the slice information. To be specific, the terminal device sends a UL NAS transport message to the first AMF. The UL NAS transport message includes an uplink PDU session establishment request message, and at least one of the DNN and the slice information. After obtaining the first user identifier entered by the user, the terminal device includes the first user identifier in the uplink PDU session establishment request message. Correspondingly, the first AMF receives and processes the UL NAS transport message. In this case, the first AMF may obtain the first user identifier carried in the uplink PDU session establishment request message. The first AMF may further send the session request message to the SMF, where the session request message includes the first user identifier. Correspondingly, the SMF receives the session request message from the first AMF. In this case, the SMF may obtain the first user identifier included in the session request message.

Manner 3: The SMF receives an EAP response message from the terminal device, where the EAP response message includes the first user identifier.

In a specific implementation, if the SMF does not receive the first user identifier in an uplink PDU session establishment request message from the terminal device or a session request message from the first AMF, the SMF may send an EAP request message (namely, EAP-Request/identity()) to the terminal device after initiating a secondary authentication procedure for a PDU session of the DNN, to request the first user identifier entered by the user on the terminal device. Correspondingly, after receiving the EAP request message, the terminal device returns an EAP response message (namely, EAP-Response/identity()) to the SMF, where the EAP response message includes the first user identifier. In this case, the SMF receives the EAP response message from the terminal device, and may obtain the first user identifier included in the EAP response message.

In a possible implementation, a specific implementation in which the SMF obtains the third subscription data of the terminal device may be as follows: The SMF sends a seventh message (for example, an SM subscription() message) to a UDM, where the seventh message is used to request the third subscription data of the terminal device. Correspondingly, the UDM receives the seventh message from the SMF. The UDM sends the third subscription data of the terminal device to the SMF. Correspondingly, the SMF receives the third subscription data of the terminal device from the UDM. In this case, the third subscription data includes the binding relationship between the fourth identifier of the terminal device and the user identifier (for example, the at least one user identifier whose access is allowed or the first indication information). Optionally, the SMF further obtains, from the UDM, subscription data corresponding to the DNN and/or slice, where the subscription data corresponding to the DNN and/or slice includes a secondary authentication indication.

In a possible implementation, before the SMF determines, based on the third subscription data, that the first user identifier is allowed to access the network, the method further includes the following steps s41 to s43. This manner helps improve data communication security.

s41: The SMF sends a second authentication and authorization request message to the server. Correspondingly, the server receives the second authentication and authorization request message from the SMF.

In a specific implementation, the second authentication and authorization request message includes the first user identifier and/or the fourth identifier of the terminal device. The SMF initiates a secondary authentication procedure for a PDU session of the DNN based on the subscription data corresponding to the DNN and/or slice or according to a local policy. In this case, the SMF needs to send the second authentication and authorization request message to the server. The server herein may be an AAA server corresponding to a DN network, and is configured to perform authentication and authorization on the first user identifier. For example, the DN-AAA server is an application server of the cloud phone application.

s42: The server determines fourth subscription data corresponding to the first user identifier.

In a specific implementation, the server stores the fourth subscription data corresponding to the first user identifier, and the fourth subscription data includes the first user identifier and a third identifier of the bound terminal device. The server may find the fourth subscription data based on the first user identifier and/or the fourth identifier of the terminal device that are/is obtained from the SMF. For example, the server may directly find the fourth subscription data based on the first user identifier; or may determine whether the third identifier of the terminal device matches the fourth identifier of the terminal device, and if the third identifier of the terminal device matches the fourth identifier of the terminal device, the server may find subscription data corresponding to the third identifier of the terminal device. Because the third identifier of the terminal device is bound to the first user identifier, the subscription data corresponding to the third identifier is the fourth subscription data corresponding to the first user identifier.

s43: When the authentication and authorization on the first user identifier succeeds, the server sends a response to the second authentication and authorization request to the SMF. Correspondingly, the SMF receives the response to the second authentication and authorization request from the server.

In a specific implementation, the first authentication and authorization request response includes at least one of the following information: the first user identifier or location request indication information. The server further establishes a connection to the terminal device, and obtains a password corresponding to the first user identifier or another security-related parameter. The server may compare the first user identifier with the obtained password. When the first user identifier matches the obtained password, the server considers that the first user identifier is an authorized user, in other words, considers that the authentication and authorization on the first user identifier succeeds, and may send the response to the second authentication and authorization request to the SMF. Certainly, the server may alternatively perform authentication and authorization on the first user identifier according to another authentication and authorization solution. This is not limited in this application. Optionally, the response to the second authentication and authorization request may further include an EAP success message. The EAP success message, the location request indication information, and the first user identifier may be encapsulated in an authentication authorization message and sent to the SMF. For the first user identifier that fails to be authenticated and authorized, the server may send an EAP failure message to the SMF.

Optionally, when the server sends the response to the second authentication and authorization request to the SMF, a specific implementation may be as follows: The server determines, based on the fourth subscription data, that the first user identifier is allowed to access the network through the terminal device, and sends the response to the second authentication and authorization request to the SMF. Further, optionally, when the server determines, based on the fourth subscription data, that the first user identifier is allowed to access the network through the terminal device, a specific implementation may be as follows: When the fourth identifier of the terminal device matches the third identifier of the terminal device included in the fourth subscription data, the server allows the first user identifier to access the network through the terminal device.

It may be understood that before sending the response to the second authentication and authorization request to the SMF, in addition to performing authentication and authorization on the first user identifier, the server may determine, based on the fourth subscription data, whether the first user identifier is allowed to access the network through the terminal device. Specifically, the server may determine whether the fourth identifier that is of the terminal device and that is sent by the SMF matches the third identifier of the terminal device that is bound in the fourth subscription data. When the fourth identifier of the terminal device matches the third identifier of the terminal device included in the fourth subscription data, the server may allow the first user identifier to access the network through the terminal device. If the fourth identifier of the terminal device does not match the third identifier of the terminal device included in the fourth subscription data, the server does not allow the first user identifier to access the network through the terminal device. This helps ensure communication security.

In a possible implementation, the third subscription data may include the at least one user identifier whose access is allowed or the first indication information. The first indication information herein indicates that any user identifier is allowed to access the network through the terminal device. Before sending the second authentication and authorization request message to the server, the SMF needs to determine whether the first user identifier entered by the user on the terminal device is allowed to access the network. This manner helps improve security of a cloud phone account. The following describes the two cases in detail.

Case 1: The third subscription data includes the at least one user identifier whose access is allowed. Before the SMF sends the second authentication and authorization request message to the server, when the SMF determines, based on the third subscription data, that the first user identifier is allowed to access the network, a specific implementation may be as follows: When the first user identifier matches the at least one user identifier included in the third subscription data, the SMF allows the first user identifier to access the network.

In a specific implementation, before sending the second authentication and authorization request message to the server, the SMF needs to determine whether the first user identifier entered by the user on the terminal device is allowed to access the network. The third subscription data includes the at least one user identifier whose access is allowed. When the first user identifier matches the at least one user identifier included in the third subscription data, it indicates that the first user identifier is an authorized user identifier, and the SMF allows the first user identifier to access the network. If the first user identifier does not match the at least one user identifier included in the third subscription data, it indicates that the first user identifier is not an authorized user identifier, and the SMF does not allow the first user identifier to access the network. This manner helps improve the security of the cloud phone account.

For example, the at least one user identifier included in the third subscription data is 111 and 222. If the first user identifier is 111, the at least one user identifier has an identifier that matches the first user identifier. In this case, the SMF allows the first user identifier to access the network. If the first user identifier is 333, the at least one user identifier has no identifier that matches the first user identifier. In this case, the SMF does not allow the first user identifier to access the network.

Case 2: The third subscription data includes the first indication information. Before the SMF sends the second authentication and authorization request message to the server, when the SMF determines, based on the third subscription data, that the first user identifier is allowed to access the network, a specific implementation may be as follows: When the first subscription data includes the first indication information, the SMF allows the first user identifier to access the network.

In a specific implementation, before sending the second authentication and authorization request message to the server, the SMF needs to determine whether the first user identifier entered by the user on the terminal device is allowed to access the network. The third subscription data includes the first indication information. When the third subscription data includes the first indication information, it means that any user identifier is allowed to access the network through the terminal device. Therefore, the SMF may allow the first user identifier to access the network.

S1002: The SMF determines, based on the third subscription data, that the first user identifier is allowed to access the network, and sends a third message to the server; or the SMF determines, based on the third subscription data, to send a third message to the server. Correspondingly, the server receives the third message from the SMF.

In this embodiment of this application, the third message includes location information of the terminal device. When the SMF determines, based on the third subscription data, that the first user identifier is allowed to access the network, the SMF notifies the server of the location information of the terminal device. Alternatively, the SMF may receive the location request indication information in the response to the second authentication and authorization request from the server, and send the third message to the server based on the location request indication information, where the third message carries the location information of the terminal device. Alternatively, because the third subscription data may include the secondary authentication indication and/or information about the server, the SMF may directly send the third message to the server. It may be understood that, that the SMF determines, based on the third subscription data, that the first user identifier is allowed to access the network may be an optional step.

In a possible implementation, the third subscription data may include the at least one user identifier whose access is allowed or the first indication information. The first indication information herein indicates that any user identifier is allowed to access the network through the terminal device. After receiving the response to the second authentication and authorization request from the server, and before sending the third message to the server, the SMF may also determine whether the first user identifier entered by the user on the terminal device is allowed to access the network. For a specific implementation in which the SMF determines, based on the third subscription data, that the first user identifier is allowed to access the network, refer to the descriptions of the case 1 and the case 2 in step S1001. Details are not described herein again.

Optionally, the SMF may obtain session policy information from the PCF. Correspondingly, the PCF sends a related PCC rule to the SMF, where the PCC rule includes a QoS policy.

Optionally, the SMF may forward, to the terminal device, the EAP success message or the EAP failure message obtained from the server.

In a possible implementation, the third message further includes second success indication information, and the second success indication information indicates that the first user identifier is allowed to access the network. Optionally, the third message further includes the first user identifier. It may be understood that, after determining, based on the third subscription data, that the first user identifier is allowed to access the network, the SMF may further include the second success indication information and/or the first user identifier in the third message in addition to the location information of the terminal device, to notify the server that the SMF allows the first user identifier to access the network. Certainly, if the SMF determines, based on the third subscription data, that the first user identifier is not allowed to access the network, the third message may carry second rejection indication information, to notify the server that the SMF does not allow the first user identifier to access the network.

S1003: The server stores the location information in the fourth subscription data corresponding to the first user identifier or third context information corresponding to the first user identifier.

In this embodiment of this application, after obtaining the location information of the terminal device, the server stores, as login location information of the first user identifier, the location information in the fourth subscription data corresponding to the first user identifier or the third context information corresponding to the first user identifier.

S1004: The server sends a third registration request message to the first AMF. Correspondingly, the first AMF receives the third registration request message from the server.

In this embodiment of this application, the server may further initiate a registration procedure to the first AMF as a virtual terminal device, in other words, send the third registration request message to the first AMF. The third registration request message includes the location information and a second user identifier. The second user identifier is the same as or different from the first user identifier. The second user identifier may include at least one of the following information: the first user identifier, and user permanent identifier information (for example, an SUPI or a subscription concealed identifier (Subscription concealed identifier, SUCI)) in the fourth subscription data corresponding to the first user identifier.

S1005: The first AMF creates fourth context information corresponding to the second user identifier.

S1006: The first AMF stores the location information in the fourth context information.

In this embodiment of this application, the first AMF parses the received third registration request message to obtain the location information of the terminal device and the second user identifier. The first AMF may create the fourth context information corresponding to the second user identifier, and then store the location information of the terminal device as location information of the second user identifier in the fourth context information corresponding to the second user identifier. In this case, the first AMF obtains the location information of the second user identifier. When the second user identifier and the first user identifier are the same, the location information of the terminal device may also be used as location information of the first user identifier.

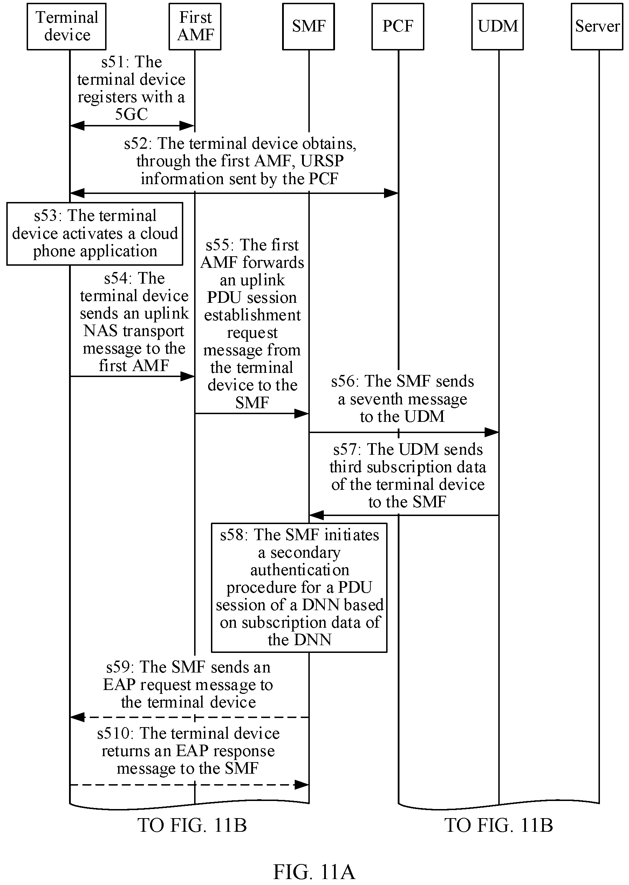

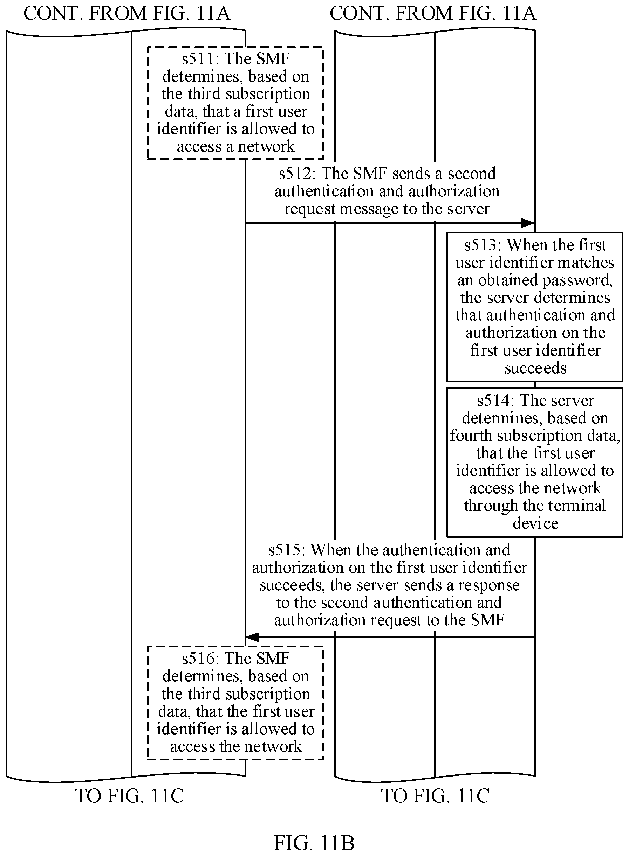

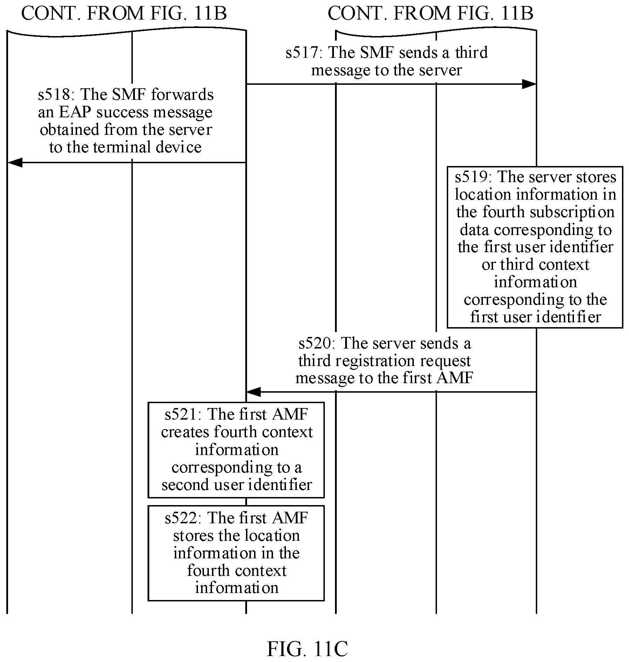

Based on the foregoing descriptions, the following uses a complete example for description. As shown in FIG. 11A to FIG. 11C, in a scenario of a cloud phone application, the communication method may include the following steps s51 to s522. Steps s59 to s511 and s516 are optional steps.

s51: A terminal device registers with a 5GC.

s52: The terminal device obtains, through a first AMF, URSP information sent by a PCF.

The URSP information includes an application identifier (namely, an identifier of the cloud phone application), and a DNN and/or slice information that correspond/corresponds to the cloud phone application.

s53: The terminal device activates the cloud phone application.

For example, a user starts the cloud phone application on the terminal device, and enters a user account (namely, a first user identifier) and a password.

s54: The terminal device sends an uplink NAS transport message to the first AMF. Correspondingly, the first AMF receives the uplink NAS transport message from the terminal device.

The uplink NAS transport message includes an uplink PDU session establishment request message and at least one of the DNN and the slice information. The uplink PDU session establishment request message includes the first user identifier.

s55: The first AMF forwards the uplink PDU session establishment request message from the terminal device to an SMF.

s56: The SMF sends a seventh message to a UDM. Correspondingly, the UDM receives the seventh message from the SMF.

The seventh message may be an SM subscription() message, and the seventh message is used to request third subscription data of the terminal device. The third subscription data of the terminal device includes a fourth identifier of the terminal device and a user identifier bound to the terminal device.

s57: The UDM sends the third subscription data of the terminal device to the SMF. Correspondingly, the SMF receives the third subscription data of the terminal device from the UDM.

s58: The SMF initiates a secondary authentication procedure for a PDU session of the DNN based on subscription data of the DNN.

Optionally, if the SMF does not receive the first user identifier in the uplink PDU session establishment request message from the terminal device or a session request message from the first AMF, the SMF may send an EAP request message (namely, EAP-Request/identity()) to the terminal device, to request the first user identifier entered by the user on the terminal device. Specifically, the following steps s59 and s510 may be used.

s59: The SMF sends the EAP request message to the terminal device. Correspondingly, the terminal device receives the EAP request message from the SMF.

s510: The terminal device returns an EAP response message to the SMF. Correspondingly, the SMF receives the EAP response message from the terminal device.

The EAP response message includes the first user identifier.

Optionally, in s511, the SMF determines, based on the third subscription data, that the first user identifier is allowed to access a network.

It may be understood that before sending a second authentication and authorization request message to a server, the SMF needs to determine whether the first user identifier entered by the user on the terminal device is allowed to access the network. Steps s512 to s522 can be performed only when the SMF determines, based on the third subscription data, that the first user identifier is allowed to access the network. For a specific implementation, refer to the descriptions of step S1001. Details are not described herein again.

s512: The SMF sends the second authentication and authorization request message to the server. Correspondingly, the server receives the second authentication and authorization request message from the SMF.

The second authentication and authorization request message includes the first user identifier and/or the fourth identifier of the terminal device.

s513: When the first user identifier matches an obtained password, the server determines that authentication and authorization on the first user identifier succeeds.

s514: The server determines, based on fourth subscription data, that the first user identifier is allowed to access the network through the terminal device.

s515: When the authentication and authorization on the first user identifier succeeds, the server sends a response to the second authentication and authorization request to the SMF. Correspondingly, the SMF receives the response to the second authentication and authorization request from the server.

The response to the first authentication and authorization request includes at least one of the following information: the first user identifier or location request indication information. For specific implementations of steps s512 to s515, refer to the descriptions of the foregoing steps s41 to s43. Details are not described herein again.

Optionally, in s516, the SMF determines, based on the third subscription data, that the first user identifier is allowed to access the network. For a specific implementation, refer to the descriptions of step S1001. Details are not described herein again. It may be understood that both step s511 and step s516 are optional steps. Only one of the steps may be performed, or neither of the steps may be performed. If neither of the steps is performed, it indicates that the terminal device allows any user identifier to access the network.

s517: The SMF sends a third message to the server. Correspondingly, the server receives the third message from the SMF.

The third message includes location information of the terminal device. Optionally, the third message further includes second success indication information, and the second success indication information indicates that the first user identifier is allowed to access the network. Optionally, the third message further includes the first user identifier.

s518: The SMF forwards an EAP success message obtained from the server to the terminal device.

s519: The server stores the location information in the fourth subscription data corresponding to the first user identifier or third context information corresponding to the first user identifier.

s520: The server sends a third registration request message to the first AMF. Correspondingly, the first AMF receives the third registration request message from the server.

s521: The first AMF creates fourth context information corresponding to a second user identifier.

s522: The first AMF stores the location information in the fourth context information.

For specific implementations of steps s517 to s522, refer to the descriptions of steps S1002 to S1006. Details are not described herein again.

It can be learned that, according to the method described in FIG. 10, for a scenario of a cloud phone application, when a cloud phone server initiates a registration procedure to a core network as virtual user equipment, it can be ensured that the core network obtains location information of a user who logs in to a cloud phone account; in addition, a binding relationship between the cloud phone account and a mobile phone identifier is supported, and security of the cloud phone account is improved.

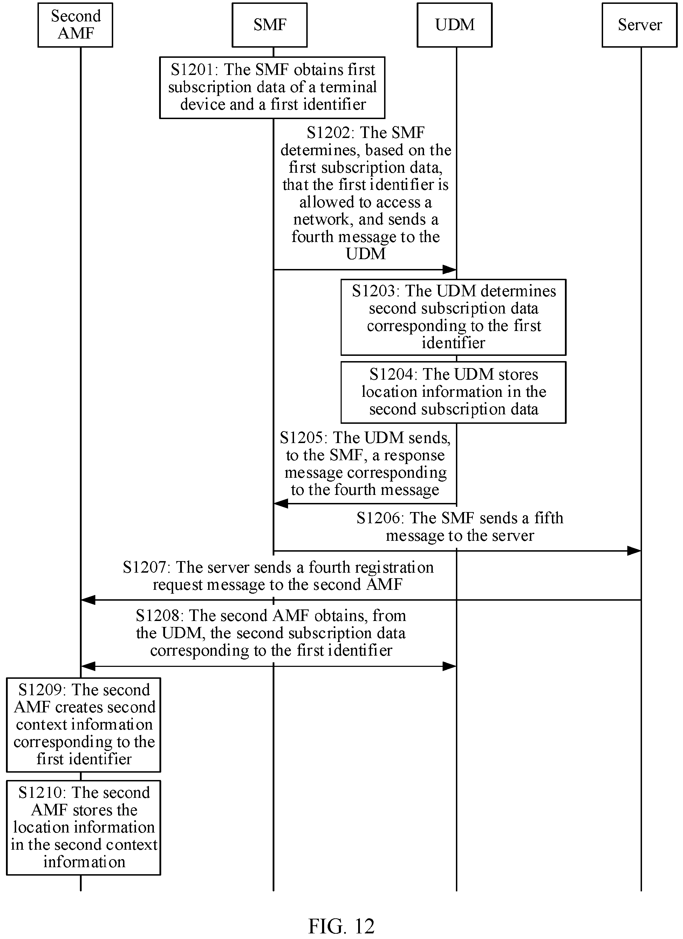

FIG. 12 is a schematic flowchart of another communication method according to an embodiment of this application. As shown in FIG. 12, the communication method includes the following steps S1201 to S1210. The method shown in FIG. 12 may be performed by the second AMF, the SMF, the UDM, and the server that are mentioned above. Alternatively, the method shown in FIG. 12 may be performed by a device or a chip having the second AMF, the SMF, the UDM, and the server. This is not limited in this embodiment of this application. FIG. 12 is described by using an example in which the method is performed by the second AMF, the SMF, the UDM, and the server. The server herein may include a function of a second access network device (in other words, the server and the second access network device are deployed on a same platform). The second AMF herein may be the same as or different from a first AMF.

S1201: The SMF obtains first subscription data of a terminal device and a first identifier.

For a specific implementation of step S1201, refer to the descriptions of step S601. Details are not described herein again.

S1202: The SMF determines, based on the first subscription data, that the first identifier is allowed to access a network, and sends a fourth message to the UDM. Correspondingly, the UDM receives the fourth message from the SMF.

In this embodiment of this application, the fourth message includes location information of the terminal device and the first identifier. When the SMF determines, based on the first subscription data, that the first identifier is allowed to access the network, the SMF includes the location information of the terminal device and the first identifier in the fourth message, and sends the fourth message to the UDM.

S1203: The UDM determines second subscription data corresponding to the first identifier.

S1204: The UDM stores the location information in the second subscription data.

S1205: The UDM sends, to the SMF, a response message corresponding to the fourth message. Correspondingly, the SMF receives, from the UDM, the response message corresponding to the fourth message.

In this embodiment of this application, the UDM finds, based on the first identifier, the second subscription data corresponding to the first identifier; stores, in the second subscription data, the location information of the terminal device obtained from the fourth message; and the UDM returns a success message (namely, the response message corresponding to the fourth message) to the SMF.

S1206: The SMF sends a fifth message to the server. Correspondingly, the server receives the fifth message from the SMF.

Optionally, the SMF may obtain session policy information from a PCF. Correspondingly, the PCF sends a related PCC rule to the SMF, where the PCC rule includes a QoS policy.

Optionally, the SMF may forward, to the terminal device, an EAP success message or an EAP failure message obtained from the server.

In a possible implementation, the first subscription data includes a bound second identifier; and when the SMF determines, based on the first subscription data, that the first identifier is allowed to access the network, a specific implementation may be as follows: When the first identifier matches the second identifier included in the first subscription data, the SMF allows the first identifier to access the network. It may be understood that before sending a first message to the server, the SMF also needs to determine whether the first identifier (for example, a C-UE SUPI/GPSI/User ID) is allowed to access the network. Specifically, the SMF needs to determine whether the first identifier matches the bound second identifier in the first subscription data. When the first identifier matches the second identifier included in the first subscription data, the SMF may allow the first identifier to access the network. If the first identifier does not match the bound second identifier in the first subscription data, the SMF does not allow the first identifier to access the network. This manner helps improve security of a cloud phone account.

In a possible implementation, the first message further includes first success indication information, and the first success indication information indicates that the first identifier is allowed to access the network. It may be understood that, after determining, based on the first subscription data, that the first identifier is allowed to access the network, the SMF may include the first success indication information in the first message in addition to the first identifier, to notify the server that the SMF allows the first identifier to access the network. Certainly, if the SMF determines, based on the first subscription data, that the first identifier is not allowed to access the network, the first message may carry first rejection indication information, to notify the server that the SMF does not allow the first identifier to access the network.

S1207: The server sends a fourth registration request message to the second AMF. Correspondingly, the second AMF receives the fourth registration request from the server.

In this embodiment of this application, the fifth message includes the first identifier. The SMF further sends the fifth message to the server. After receiving the fifth message, the server may initiate a registration procedure to the second AMF as a virtual terminal device, in other words, send the fourth registration request message to the second AMF. The fourth registration request message includes the first identifier. The second AMF herein may be any AMF selected by an application platform, for example, a target AMF selected based on load balancing. The second AMF may be the same as or different from the first AMF.

S1208: The second AMF obtains, from the UDM, the second subscription data corresponding to the first identifier.

In this embodiment of this application, the second subscription data includes the location information of the terminal device. The second AMF may send a first subscription request to the UDM. The first subscription request includes the first identifier. The first subscription request is used to request the second subscription data corresponding to the first identifier. After receiving the subscription request, the UDM sends a first subscription response to the second AMF, where the subscription response includes the second subscription data corresponding to the first identifier. Because the UDM stores the location information of the terminal device in the second subscription data in step S1204, the second AMF may obtain the location information of the terminal device from the second subscription data.

S1209: The second AMF creates second context information corresponding to the first identifier.

S1210: The second AMF stores the location information in the second context information.

In this embodiment of this application, the second AMF may create the second context information corresponding to the first identifier, and then store the location information of the terminal device as location information of the first identifier (namely, location information of a cloud terminal device) in the second context information corresponding to the first identifier. In this case, the second AMF obtains the location information of the first identifier (namely, the location information of the cloud terminal device).

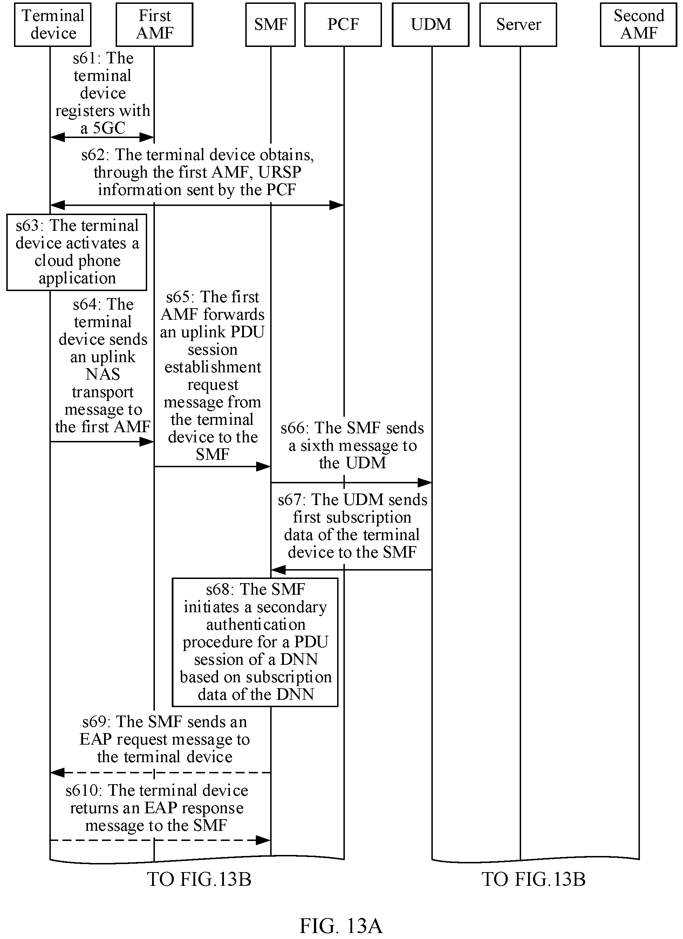

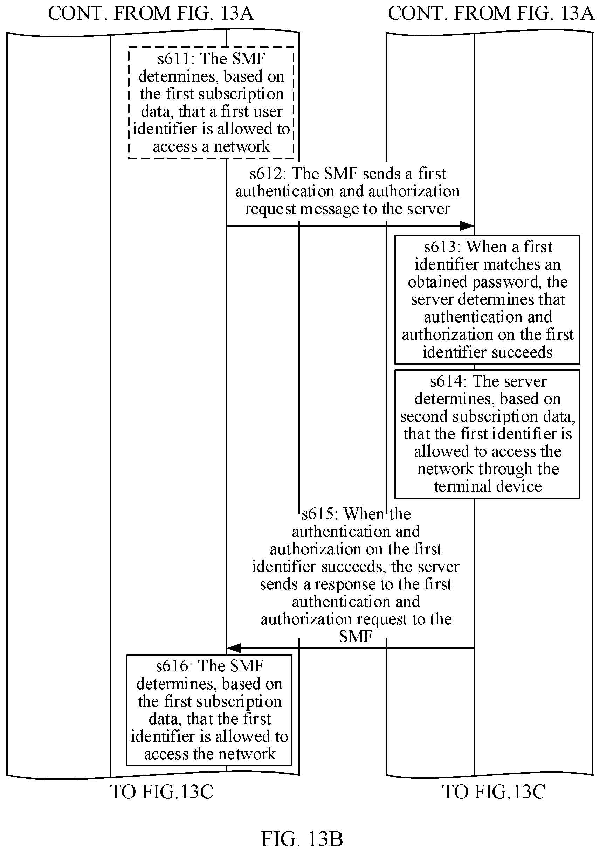

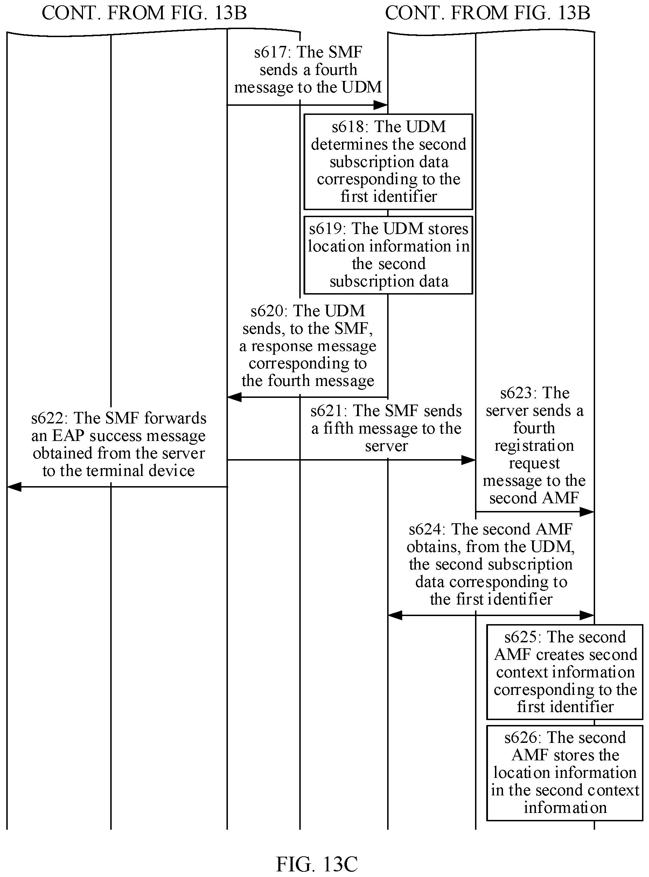

Based on the foregoing descriptions, the following uses a complete example for description. As shown in FIG. 13A to FIG. 13C, in a scenario of a cloud phone application, the communication method may include the following steps s61 to s626. Steps s69 to s611 are optional steps.

s61: A terminal device registers with a 5GC.

s62: The terminal device obtains, through a first AMF, URSP information sent by a PCF.

The URSP information includes an application identifier (namely, an identifier of the cloud phone application), and a DNN and/or slice information that correspond/corresponds to the cloud phone application.

s63: The terminal device activates the cloud phone application.

For example, a user starts the cloud phone application on the terminal device, and enters a user account (namely, a first user identifier) and a password.

s64: The terminal device sends an uplink NAS transport message to the first AMF. Correspondingly, the first AMF receives the uplink NAS transport message from the terminal device.

The uplink NAS transport message includes an uplink PDU session establishment request message and at least one of the DNN and the slice information. The uplink PDU session establishment request message includes the first user identifier.

s65: The first AMF forwards the uplink PDU session establishment request message from the terminal device to an SMF.

s66: The SMF sends a sixth message to a UDM. Correspondingly, the UDM receives the sixth message from the SMF.

The sixth message may be an SM subscription() message, and the sixth message is used to request first subscription data of the terminal device. The first subscription data of the terminal device includes a fourth identifier of the terminal device and a second identifier bound to the terminal device.

s67: The UDM sends the first subscription data of the terminal device to the SMF. Correspondingly, the SMF receives the first subscription data of the terminal device from the UDM.

s68: The SMF initiates a secondary authentication procedure for a PDU session of the DNN based on subscription data of the DNN.

Optionally, if the SMF does not receive the first user identifier in the uplink PDU session establishment request message from the terminal device or a session request message from the first AMF, the SMF may send an EAP request message (namely, EAP-Request/identity()) to the terminal device, to request the first user identifier entered by the user on the terminal device. Specifically, the following steps s69 and s610 may be used.

s69: The SMF sends the EAP request message to the terminal device. Correspondingly, the terminal device receives the EAP request message from the SMF.

s610: The terminal device returns an EAP response message to the SMF. Correspondingly, the SMF receives the EAP response message from the terminal device.

The EAP response message includes the first user identifier.

Optionally, in s611, the SMF determines, based on the first subscription data, that the first user identifier is allowed to access a network.

It may be understood that before sending a first authentication and authorization request message to a server, the SMF needs to determine whether the first user identifier entered by the user on the terminal device is allowed to access the network. Steps s612 to s623 can be performed only when the SMF determines, based on the first subscription data, that the first user identifier is allowed to access the network. For a specific implementation, refer to the descriptions of step S601. Details are not described herein again.

s612: The SMF sends the first authentication and authorization request message to the server. Correspondingly, the server receives the first authentication and authorization request message from the SMF.

The first authentication and authorization request message includes a first identifier and/or the fourth identifier of the terminal device.

s613: When the first identifier matches an obtained password, the server determines that authentication and authorization on the first identifier succeeds.

s614: The server determines, based on second subscription data, that the first identifier is allowed to access the network through the terminal device.

s615: When the authentication and authorization on the first identifier succeeds, the server sends a response to the first authentication and authorization request to the SMF. Correspondingly, the SMF receives the response to the first authentication and authorization request from the server.

The response to the first authentication and authorization request includes the first identifier. For specific implementations of steps s612 to s615, refer to the descriptions of the foregoing steps s11 to s13. Details are not described herein again.

s616: The SMF determines, based on the first subscription data, that the first identifier is allowed to access the network.

s617: The SMF sends a fourth message to the UDM. Correspondingly, the UDM receives the fourth message from the SMF.

s618: The UDM determines the second subscription data corresponding to the first identifier.

s619: The UDM stores location information in the second subscription data.

s620: The UDM sends, to the SMF, a response message corresponding to the fourth message. Correspondingly, the SMF receives, from the UDM, the response message corresponding to the fourth message.

s621: The SMF sends a fifth message to the server. Correspondingly, the server receives the fifth message from the SMF.

s622: The SMF forwards an EAP success message obtained from the server to the terminal device.

s623: The server sends a fourth registration request message to the second AMF. Correspondingly, the second AMF receives the fourth registration request from the server.

s624: The second AMF obtains, from the UDM, the second subscription data corresponding to the first identifier.

s625: The second AMF creates second context information corresponding to the first identifier.

s626: The second AMF stores the location information in the second context information.

For specific implementations of steps s616 to s626, refer to the descriptions of steps S1202 to S1210. Details are not described herein again.

It can be learned that, according to the method described in FIG. 12, for a scenario of a cloud phone application, when a cloud phone server initiates a registration procedure to a core network as virtual user equipment, it can be ensured that the core network obtains location information of a user who logs in to a cloud phone account; in addition, a binding relationship between the cloud phone account and a mobile phone identifier is supported, and security of the cloud phone account is improved.

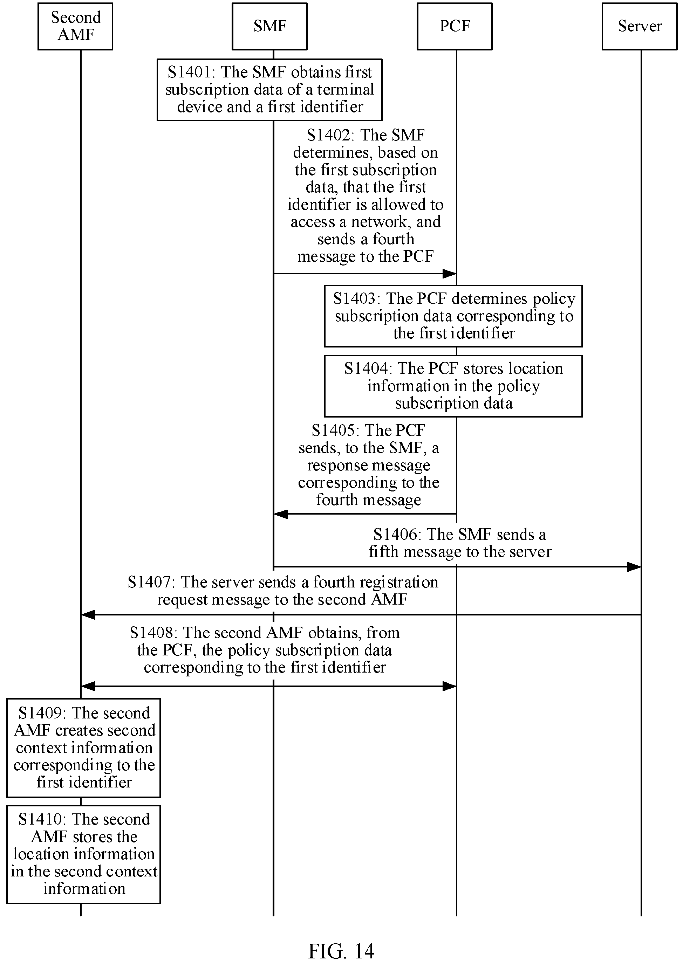

FIG. 14 is a schematic flowchart of another communication method according to an embodiment of this application. As shown in FIG. 14, the communication method includes the following steps S1401 to S1410. The method shown in FIG. 14 may be performed by the second AMF, the SMF, the PCF, and the server that are mentioned above. Alternatively, the method shown in FIG. 14 may be performed by a device or a chip having the second AMF, the SMF, the PCF, and the server. This is not limited in this embodiment of this application. FIG. 14 is described by using an example in which the method is performed by the second AMF, the SMF, the PCF, and the server. The server herein may include a function of a second access network device (in other words, the server and the second access network device are deployed on a same platform). The second AMF herein may be the same as or different from a first AMF.

S1401: The SMF obtains first subscription data of a terminal device and a first identifier.

For a specific implementation of step S1401, refer to the descriptions of step S601. Details are not described herein again.

S1402: The SMF determines, based on the first subscription data, that the first identifier is allowed to access a network, and sends a fourth message to the PCF. Correspondingly, the PCF receives the fourth message from the SMF.

In this embodiment of this application, the fourth message includes location information of the terminal device and the first identifier. The fourth message may be a policy request message. When the SMF determines, based on the first subscription data, that the first identifier is allowed to access the network, the SMF includes the location information of the terminal device and the first identifier in the fourth message, and sends the fourth message to the PCF.

S1403: The PCF determines policy subscription data corresponding to the first identifier.

S1404: The PCF stores the location information in the policy subscription data.

S1405: The PCF sends, to the SMF, a response message corresponding to the fourth message. Correspondingly, the SMF receives, from the PCF, the response message corresponding to the fourth message.

In this embodiment of this application, the PCF finds, based on the first identifier, the policy subscription data corresponding to the first identifier; stores, in the policy subscription data, the location information of the terminal device obtained from the policy request message; and the PCF returns, to the SMF, the response message corresponding to the fourth message.

S1406: The SMF sends a fifth message to the server. Correspondingly, the server receives the fifth message from the SMF.

Optionally, the SMF may obtain session policy information from the PCF. Correspondingly, the PCF sends a related PCC rule to the SMF, where the PCC rule includes a QoS policy.

Optionally, the SMF may forward, to the terminal device, an EAP success message or an EAP failure message obtained from the server.

In a possible implementation, the first subscription data includes a bound second identifier; and when the SMF determines, based on the first subscription data, that the first identifier is allowed to access the network, a specific implementation may be as follows: When the first identifier matches the second identifier included in the first subscription data, the SMF allows the first identifier to access the network. It may be understood that before sending a first message to the server, the SMF also needs to determine whether the first identifier (for example, a C-UE SUPI/GPSI/User ID) is allowed to access the network. Specifically, the SMF needs to determine whether the first identifier matches the bound second identifier in the first subscription data. When the first identifier matches the second identifier included in the first subscription data, the SMF may allow the first identifier to access the network. If the first identifier does not match the bound second identifier in the first subscription data, the SMF does not allow the first identifier to access the network. This manner helps improve security of a cloud phone account.

In a possible implementation, the first message further includes first success indication information, and the first success indication information indicates that the first identifier is allowed to access the network. It may be understood that, after determining, based on the first subscription data, that the first identifier is allowed to access the network, the SMF may include the first success indication information in the first message in addition to the first identifier, to notify the server that the SMF allows the first identifier to access the network. Certainly, if the SMF determines, based on the first subscription data, that the first identifier is not allowed to access the network, the first message may carry first rejection indication information, to notify the server that the SMF does not allow the first identifier to access the network.

S1407: The server sends a fourth registration request message to the second AMF. Correspondingly, the second AMF receives the fourth registration request from the server.

In this embodiment of this application, the fifth message includes the first identifier. The SMF further sends the fifth message to the server. After receiving the fifth message, the server may initiate a registration procedure to the second AMF as a virtual terminal device, in other words, send the fourth registration request message to the second AMF. The fourth registration request message includes the first identifier. The second AMF herein may be any AMF selected by an application platform, for example, a target AMF selected based on load balancing. The second AMF may be the same as or different from the first AMF.

S1408: The second AMF obtains, from the PCF, the policy subscription data corresponding to the first identifier.

In this embodiment of this application, the policy subscription data includes the location information of the terminal device. The second AMF may send a second subscription request to the PCF. The second subscription request includes the first identifier. The second subscription request is used to request the policy subscription data corresponding to the first identifier. After receiving the second subscription request, the PCF sends a second subscription response to the second AMF, where the second subscription response includes the policy subscription data corresponding to the first identifier. Because the PCF stores the location information of the terminal device in the policy subscription data in step S1204, the second AMF may obtain the location information of the terminal device from the policy subscription data.

S1409: The second AMF creates second context information corresponding to the first identifier.

S1410: The second AMF stores the location information in the second context information.

In this embodiment of this application, the second AMF may create the second context information corresponding to the first identifier, and then store the location information of the terminal device as location information of the first identifier (namely, location information of a cloud terminal device) in the second context information corresponding to the first identifier. In this case, the second AMF obtains the location information of the first identifier (namely, the location information of the cloud terminal device).

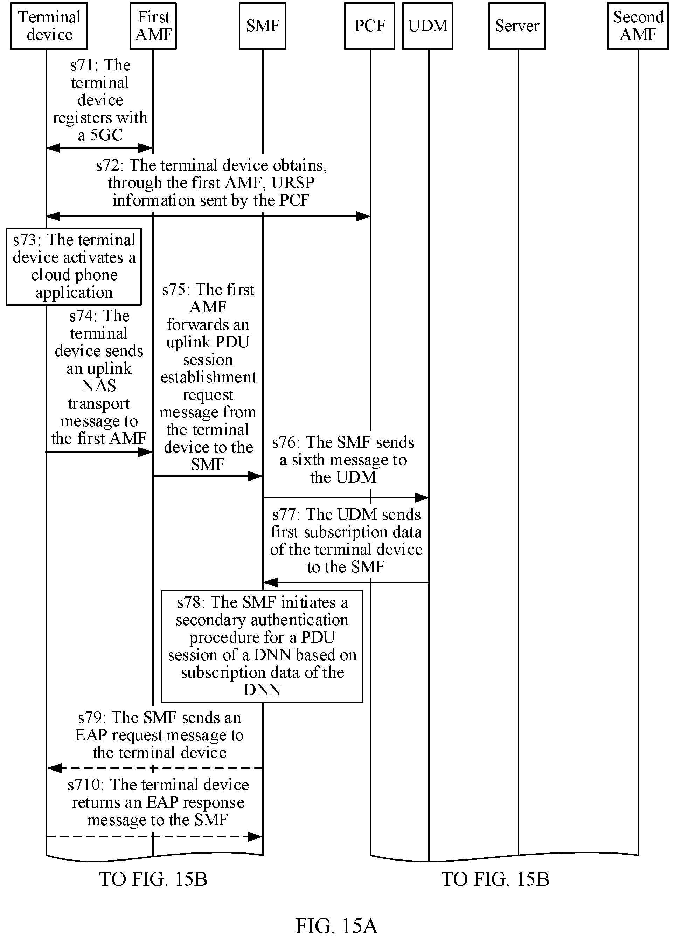

Based on the foregoing descriptions, the following uses a complete example for description. As shown in FIG. 15A to FIG. 15C, in a scenario of a cloud phone application, the communication method may include the following steps s71 to s726. Steps s79 to s711 are optional steps.

s71: A terminal device registers with a 5GC.

s72: The terminal device obtains, through a first AMF, URSP information sent by a PCF.

The URSP information includes an application identifier (namely, an identifier of the cloud phone application), and a DNN and/or slice information that correspond/corresponds to the cloud phone application.

s73: The terminal device activates the cloud phone application.

For example, a user starts the cloud phone application on the terminal device, and enters a user account (namely, a first user identifier) and a password.

s74: The terminal device sends an uplink NAS transport message to the first AMF. Correspondingly, the first AMF receives the uplink NAS transport message from the terminal device.

The uplink NAS transport message includes an uplink PDU session establishment request message and at least one of the DNN and the slice information. The uplink PDU session establishment request message includes the first user identifier.

s75: The first AMF forwards the uplink PDU session establishment request message from the terminal device to an SMF.

s76: The SMF sends a sixth message to a UDM. Correspondingly, the UDM receives the sixth message from the SMF.

The sixth message may be an SM subscription() message, and the sixth message is used to request first subscription data of the terminal device. The first subscription data of the terminal device includes a fourth identifier of the terminal device and a second identifier bound to the terminal device.

s77: The UDM sends the first subscription data of the terminal device to the SMF. Correspondingly, the SMF receives the first subscription data of the terminal device from the UDM.

s78: The SMF initiates a secondary authentication procedure for a PDU session of the DNN based on subscription data of the DNN.

Optionally, if the SMF does not receive the first user identifier in the uplink PDU session establishment request message from the terminal device or a session request message from the first AMF, the SMF may send an EAP request message (namely, EAP-Request/identity()) to the terminal device, to request the first user identifier entered by the user on the terminal device. Specifically, the following steps s69 and s610 may be used.

s79: The SMF sends the EAP request message to the terminal device. Correspondingly, the terminal device receives the EAP request message from the SMF.

s710: The terminal device returns an EAP response message to the SMF. Correspondingly, the SMF receives the EAP response message from the terminal device.

The EAP response message includes the first user identifier.

Optionally, in s711, the SMF determines, based on the first subscription data, that the first user identifier is allowed to access a network.

It may be understood that before sending a first authentication and authorization request message to a server, the SMF needs to determine whether the first user identifier entered by the user on the terminal device is allowed to access the network. Steps s712 to s723 can be performed only when the SMF determines, based on the first subscription data, that the first user identifier is allowed to access the network. For a specific implementation, refer to the descriptions of step S601. Details are not described herein again.

s712: The SMF sends the first authentication and authorization request message to the server. Correspondingly, the server receives the first authentication and authorization request message from the SMF.

The first authentication and authorization request message includes a first identifier and/or the fourth identifier of the terminal device.

s713: When the first identifier matches an obtained password, the server determines that authentication and authorization on the first identifier succeeds.

s714: The server determines, based on second subscription data, that the first identifier is allowed to access the network through the terminal device.

s715: When the authentication and authorization on the first identifier succeeds, the server sends a response to the first authentication and authorization request to the SMF. Correspondingly, the SMF receives the response to the first authentication and authorization request from the server.

The response to the first authentication and authorization request includes the first identifier. For specific implementations of steps s612 to s615, refer to the descriptions of the foregoing steps s11 to s13. Details are not described herein again.

s716: The SMF determines, based on the first subscription data, that the first identifier is allowed to access the network.

s717: The SMF sends a fourth message to the PCF. Correspondingly, the PCF receives the fourth message from the SMF.

s718: The PCF determines policy subscription data corresponding to the first identifier.

s719: The PCF stores location information in the policy subscription data.

s720: The PCF sends, to the SMF, a response message corresponding to the fourth message. Correspondingly, the SMF receives, from the PCF, the response message corresponding to the fourth message.

s721: The SMF sends a fifth message to the server. Correspondingly, the server receives the fifth message from the SMF.

s722: The SMF forwards an EAP success message obtained from the server to the terminal device.

s723: The server sends a fourth registration request message to the second AMF. Correspondingly, the second AMF receives the fourth registration request from the server.

s724: The second AMF obtains, from the PCF, the policy subscription data corresponding to the first identifier.

s725: The second AMF creates second context information corresponding to the first identifier.

s726: The second AMF stores the location information in the second context information.

For specific implementations of steps s716 to s726, refer to the descriptions of steps S1402 to S1410. Details are not described herein again.

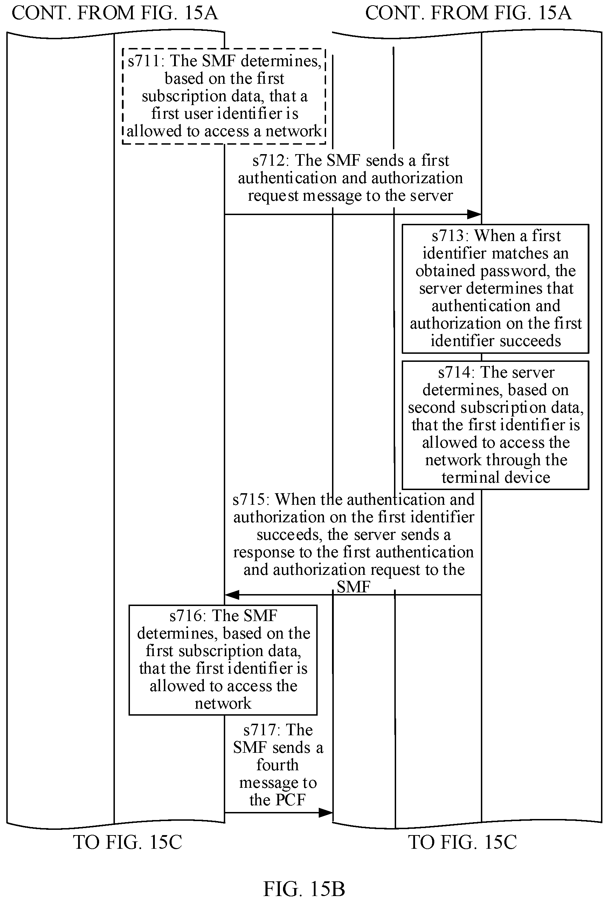

It can be learned that, according to the method described in FIG. 15A, FIG. 15B, and

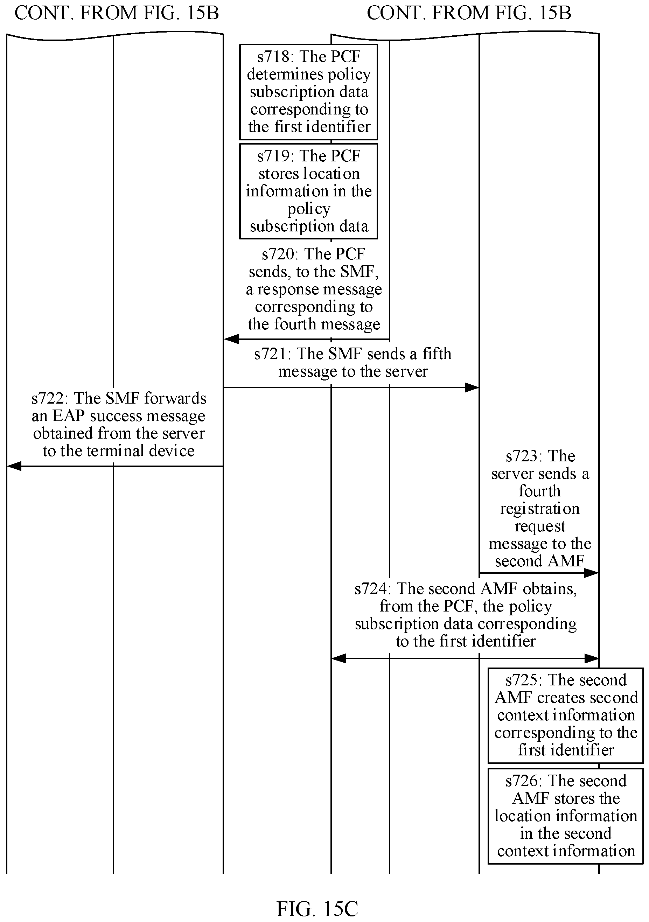

FIG. 15C, for a scenario of a cloud phone application, when a cloud phone server initiates a registration procedure to a core network as virtual user equipment, it can be ensured that the core network obtains location information of a user who logs in to a cloud phone account; in addition, a binding relationship between the cloud phone account and a mobile phone identifier is supported, and security of the cloud phone account is improved.

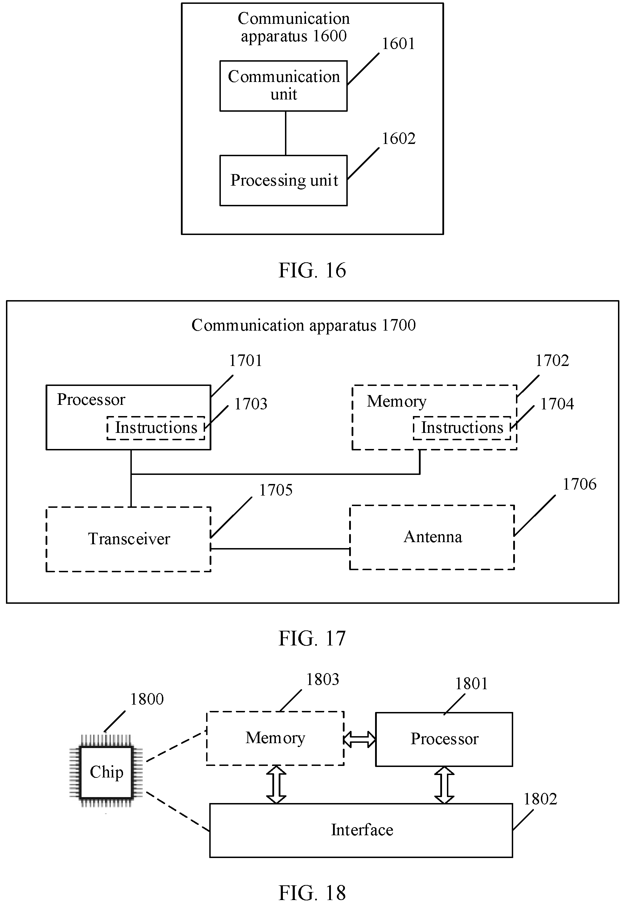

FIG. 16 is a diagram of a structure of a communication apparatus 1600 according to an embodiment of this application. The communication apparatus shown in FIG. 16 may be an SMF, a server, a first AMF, a second AMF, a UDM, or a PCF; may be an apparatus in an SMF, a server, a first AMF, a second AMF, a UDM, or a PCF; or may be an apparatus that can be used together with an SMF, a server, a first AMF, a second AMF, a UDM, or a PCF. Specifically, as shown in FIG. 16, the communication apparatus 1600 may include a communication unit 1601 and a processing unit 1602. The processing unit 1602 is configured to perform data processing. The communication unit 1601 is configured to perform communication. Optionally, a receiving unit and a sending unit are integrated in the communication unit 1601. The communication unit 1601 may also be referred to as a transceiver unit. Alternatively, the communication unit 1601 may be split into the receiving unit and the sending unit.

In an implementation, when the communication apparatus 1600 may be an SMF, may be an apparatus in an SMF, or may be an apparatus that can be used together with an SMF,
the processing unit 1602 is configured to obtain first subscription data of a terminal device and a first identifier; and
the processing unit 1602 is configured to determine, based on the first subscription data, that the first identifier is allowed to access a network, and the communication unit 1601 is configured to send a first message to a server, where the first message includes an identifier of a first AMF and/or a temporary identifier of the terminal device.

In a possible implementation, the first subscription data includes a bound second identifier; and when determining, based on the first subscription data, that the first identifier is allowed to access the network, the processing unit 1602 is specifically configured to: when the first identifier matches the bound second identifier included in the first subscription data, allow the first identifier to access the network.

In a possible implementation, the second identifier includes at least one user identifier whose access is allowed or first indication information, where the first indication information indicates that any user identifier is allowed to access the network through the terminal device; and the first identifier includes a first user identifier; and before determining, based on the first subscription data, that the first identifier is allowed to access the network, the processing unit 1602 is further configured to: when the first user identifier matches the at least one user identifier included in the first subscription data, allow the first user identifier to access the network; or when the first subscription data includes the first indication information, allow the first user identifier to access the network.

In a possible implementation, the first identifier includes the first user identifier; and when obtaining the first identifier, the processing unit 1602 is specifically configured to: receive an uplink PDU session establishment request message from the terminal device, where the uplink PDU session establishment request message includes the first user identifier; or receive a session request message from a first AMF, where the session request message includes the first user identifier.

In a possible implementation, before the processing unit 1602 determines, based on the first subscription data, that the first identifier is allowed to access the network, the communication unit 1601 is further configured to: send a first authentication and authorization request message to the server, where the first authentication and authorization request message includes the first identifier and/or a fourth identifier of the terminal device; and receive a response to the first authentication and authorization request from the server, where the response to the first authentication and authorization request includes the first identifier.

In a possible implementation, the first message further includes first success indication information, and the first success indication information indicates that the first identifier is allowed to access the network.

In an implementation, when the communication apparatus 1600 may be a server, may be an apparatus in a server, or may be an apparatus that can be used together with a server,
the communication unit 1601 is configured to receive a first message from a session management function SMF, where the first message includes an identifier of a first access and mobility management function AMF and/or a temporary identifier of a terminal device; and
the communication unit 1601 is further configured to send a first registration request message to a second AMF, where the first registration request message includes a first identifier and/or the temporary identifier.

In a possible implementation, the second AMF is the same as the first AMF, or the second AMF is different from the first AMF.

In a possible implementation, before receiving the first message from the SMF, the communication unit 1601 is further configured to receive a first authentication and authorization request message from the SMF, where the first authentication and authorization request message includes the first identifier and/or a fourth identifier of the terminal device; the processing unit 1602 is further configured to determine second subscription data corresponding to the first identifier, where the second subscription data includes a third identifier of the terminal device; and the communication unit 1601 is further configured to: when authentication and authorization on the first identifier succeeds, send a response to the first authentication and authorization request to the SMF, where the response to the first authentication and authorization request includes the first identifier.

In a possible implementation, when sending the response to the first authentication and authorization request to the SMF, the communication unit 1601 is specifically configured to: determine, based on the second subscription data, that the first identifier is allowed to access a network through the terminal device, and send the response to the first authentication and authorization request to the SMF.

In a possible implementation, when determining, based on the second subscription data, that the first identifier is allowed to access the network through the terminal device, the processing unit 1602 is specifically configured to: when the fourth identifier of the terminal device matches the third identifier of the terminal device included in the second subscription data, allow the first identifier to access the network through the terminal device.

In a possible implementation, the first message further includes first success indication information, and the first success indication information indicates that the first identifier is allowed to access the network.

In an implementation, when the communication apparatus 1600 may be a first AMF, may be an apparatus in a first AMF, or may be an apparatus that can be used together with a first AMF.

The communication unit 1601 is configured to receive a first registration request message from a server, where the first registration request message includes a first identifier and/or a temporary identifier of a terminal device; and
the processing unit 1602 is configured to: determine, based on the temporary identifier or a third identifier of the terminal device, first context information corresponding to the terminal device; and obtain location information of the terminal device from the first context information.

In a possible implementation, the processing unit 1602 is further configured to: create second context information corresponding to the first identifier; and store the location information in the second context information.

In a possible implementation, the first registration request message includes the first identifier; and before determining, based on the temporary identifier or the third identifier of the terminal device, the first context information corresponding to the terminal device, the processing unit 1602 is further configured to obtain second subscription data corresponding to the first identifier, where the second subscription data includes the third identifier of the terminal device and/or the temporary identifier.

In an implementation, when the communication apparatus 1600 may be a second AMF, may be an apparatus in a second AMF, or may be an apparatus that can be used together with a second AMF,
the communication unit 1601 is configured to receive a first registration request message from a server, where the first registration request message includes a first identifier and/or a temporary identifier of a terminal device;
the processing unit 1602 is configured to determine an identifier of a first access and mobility management function AMF based on the temporary identifier, the first identifier, or a third identifier of the terminal device;
the communication unit 1601 is further configured to send a second message to the first AMF, where the second message is used to request location information of the terminal device, and the second message includes at least one of the following information: the temporary identifier or the third identifier; and
the communication unit 1601 is further configured to receive, from the first AMF, a response message corresponding to the second message, where the response message corresponding to the second message includes the location information.

In a possible implementation, the communication unit 1601 is further configured to: create second context information corresponding to the first identifier; and store the location information in the second context information.

In a possible implementation, the first registration request message includes the first identifier; and before determining the identifier of the first AMF based on the temporary identifier, the first identifier, or the third identifier of the terminal device, the communication unit 1601 is further configured to obtain second subscription data corresponding to the first identifier, where the second subscription data includes the third identifier of the terminal device and/or the temporary identifier.

In a possible implementation, when determining the identifier of the first AMF based on the third identifier of the terminal device, the communication unit 1601 is specifically configured to obtain information that is about the first AMF and that is included in subscription data corresponding to the third identifier of the terminal device, where the information about the first AMF includes the identifier of the first AMF.

In a possible implementation, the first registration request message includes the first identifier; and when determining the identifier of the first AMF based on the first identifier, the processing unit 1602 is specifically configured to obtain second subscription data corresponding to the first identifier, where the second subscription data includes information about the first AMF, and the information about the first AMF includes the identifier of the first AMF.

In an implementation, when the communication apparatus 1600 may be a first AMF, may be an apparatus in a first AMF, or may be an apparatus that can be used together with a first AMF,
the communication unit 1601 is configured to receive a second message from a second access and mobility management function AMF, where the second message is used to request location information of a terminal device, and the second message includes at least one of the following information: a temporary identifier of the terminal device or a third identifier of the terminal device;
the processing unit 1602 is configured to determine, based on the temporary identifier or the third identifier, first context information corresponding to the terminal device;
the processing unit 1602 is further configured to obtain the location information from the first context information; and
the communication unit 1601 is further configured to send, to the second AMF, a response message corresponding to the second message, where the response message corresponding to the second message includes the location information.

In an implementation, when the communication apparatus 1600 may be an SMF, may be an apparatus in an SMF, or may be an apparatus that can be used together with an SMF,
the processing unit 1602 is configured to obtain a first user identifier and third subscription data of a terminal device; and
the processing unit 1602 is further configured to determine, based on the third subscription data, that the first user identifier is allowed to access a network; and the communication unit 1601 is configured to send a third message to a server; or the communication unit 1601 is configured to determine, based on the third subscription data, to send a third message to a server, where the third message includes location information of the terminal device.

In a possible implementation, the third subscription data includes at least one user identifier whose access is allowed or first indication information, and the first indication information indicates that any user identifier is allowed to access the network through the terminal device; and when determining, based on the third subscription data, that the first user identifier is allowed to access the network, the processing unit 1602 is specifically configured to: when the first user identifier matches the at least one user identifier included in the third subscription data, allow the first user identifier to access the network; or when the third subscription data includes the first indication information, allow the first user identifier to access the network.

In a possible implementation, when obtaining the first user identifier, the processing unit 1602 is specifically configured to: receive an uplink PDU session establishment request message from the terminal device, where the uplink PDU session establishment request message includes the first user identifier; or receive a session request message from a first AMF, where the session request message includes the first user identifier.

In a possible implementation, before sending the third message to the server, the communication unit 1601 is further configured to: send a second authentication and authorization request message to the server, where the second authentication and authorization request message includes the first user identifier; and receive a response to the second authentication and authorization request from the server, where the response to the second authentication and authorization request includes at least one of the following information: the first user identifier or location request indication information.

In a possible implementation, the third message further includes second success indication information, and the second success indication information indicates that the first user identifier is allowed to access the network.

In an implementation, when the communication apparatus 1600 may be a server, may be an apparatus in a server, or may be an apparatus that can be used together with a server,
the communication unit 1601 is configured to receive a third message from an SMF, where the third message includes location information of a terminal device;
the processing unit 1602 is configured to store the location information in fourth subscription data corresponding to a first user identifier or third context information corresponding to the first user identifier; and
the processing unit 1602 is further configured to send a second registration request message to a first AMF, where the second registration request message includes the location information and a second user identifier.

In a possible implementation, before receiving the third message from the SMF, the communication unit 1601 is further configured to receive a second authentication and authorization request message from the SMF, where the second authentication and authorization request message includes the first user identifier; the processing unit 1602 is further configured to determine the fourth subscription data corresponding to the first user identifier, where the fourth subscription data includes a third identifier of the bound terminal device; and the communication unit 1601 is further configured to: when authentication and authorization on the first user identifier succeeds, send a response to the second authentication and authorization request to the SMF, where the response to the second authentication and authorization request includes at least one of the following information: the first user identifier or location request indication information.

In a possible implementation, when sending the response to the second authentication and authorization request to the SMF, the communication unit 1601 is specifically configured to: determine, based on the fourth subscription data, that the first user identifier is allowed to access a network through the terminal device, and send the response to the second authentication and authorization request to the SMF.

In a possible implementation, when determining, based on the fourth subscription data, that the first user identifier is allowed to access the network through the terminal device, the communication unit 1601 is specifically configured to: when a fourth identifier of the terminal device matches the third identifier of the terminal device included in the fourth subscription data, allow the first user identifier to access the network through the terminal device.

In a possible implementation, the third message further includes second success indication information, and the second success indication information indicates that the first user identifier is allowed to access the network.

In an implementation, when the communication apparatus 1600 may be a first AMF, may be an apparatus in a first AMF, or may be an apparatus that can be used together with a first AMF,
the communication unit 1601 is configured to receive a second registration request message from a server, where the second registration request message includes location information of a terminal device and a second user identifier; and
the processing unit 1602 is configured to create fourth context information corresponding to the second user identifier, and store the location information in the fourth context information.

In an implementation, when the communication apparatus 1600 may be an SMF, may be an apparatus in an SMF, or may be an apparatus that can be used together with an SMF,
the processing unit 1602 is configured to obtain first subscription data of a terminal device and a first identifier;
the processing unit 1602 is configured to determine, based on the first subscription data, that the first identifier is allowed to access a network; and the communication unit 1601 is configured to send a fourth message to a UDM or a PCF, where the fourth message includes location information of the terminal device and the first identifier; and
the communication unit 1601 is further configured to: receive, from the UDM or the PCF, a response message corresponding to the fourth message; and send a fifth message to a server, where the fifth message includes the first identifier.

In a possible implementation, the first subscription data includes a bound second identifier; and when determining, based on the first subscription data, that the first identifier is allowed to access the network, the processing unit 1602 is specifically configured to: when the first identifier matches the bound second identifier included in the first subscription data, allow the first identifier to access the network.

In a possible implementation, the second identifier includes at least one user identifier whose access is allowed or first indication information, where the first indication information indicates that any user identifier is allowed to access the network through the terminal device; and the first identifier includes a first user identifier; and before determining, based on the first subscription data, that the first identifier is allowed to access the network, the processing unit 1602 is further configured to: when the first user identifier matches the at least one user identifier included in the first subscription data, allow the first user identifier to access the network; or when the first subscription data includes the first indication information, allow the first user identifier to access the network.

In a possible implementation, the first identifier includes the first user identifier; and when obtaining the first identifier, the processing unit 1602 is specifically configured to: receive an uplink PDU session establishment request message from the terminal device, where the uplink PDU session establishment request message includes the first user identifier; or receive a session request message from a first AMF, where the session request message includes the first user identifier.

In a possible implementation, when obtaining the first identifier, the processing unit 1602 is specifically configured to: send a first authentication and authorization request message to the server; and receive a response to the first authentication and authorization request from the server, where the response to the first authentication and authorization request includes the first identifier.

In a possible implementation, the fifth message further includes first success indication information, and the first success indication information indicates that the first identifier is allowed to access the network.

In an implementation, when the communication apparatus 1600 may be a UDM, may be an apparatus in a UDM, or may be an apparatus that can be used together with a UDM,
the communication unit 1601 is configured to receive a fourth message from an SMF, where the fourth message includes location information of a terminal device and a first identifier;
the processing unit 1602 is configured to determine second subscription data corresponding to the first identifier;
the processing unit 1602 is further configured to store the location information in the second subscription data; and
the communication unit 1601 is further configured to send, to the SMF, a response message corresponding to the fourth message.

In an implementation, when the communication apparatus 1600 may be a PCF, may be an apparatus in a PCF, or may be an apparatus that can be used together with a PCF,
the communication unit 1601 is configured to receive a fourth message from an SMF, where the fourth message includes location information of a terminal device and a first identifier;
the processing unit 1602 is configured to determine policy subscription data corresponding to the first identifier;
the processing unit 1602 is further configured to store the location information in the policy subscription data; and
the communication unit 1601 is further configured to send, to the SMF, a response message corresponding to the fourth message.

In an implementation, when the communication apparatus 1600 may be a server, may be an apparatus in a server, or may be an apparatus that can be used together with a server,
the communication unit 1601 is configured to receive a fifth message from a server, where the fifth message includes a first identifier; and
the communication unit 1601 is further configured to send a fourth registration request message to a second AMF, where the fourth registration request message includes the first identifier.

In a possible implementation, before sending the fourth registration request message to the second AMF, the communication unit 1601 is further configured to receive a first authentication and authorization request message from an SMF; the processing unit 1602 is configured to determine second subscription data corresponding to the first identifier, where the second subscription data includes a third identifier of a bound terminal device; and the communication unit 1601 is further configured to: when authentication and authorization on the first identifier succeeds, send a response to the first authentication and authorization request to the SMF, where the response to the first authentication and authorization request includes the first identifier.

In a possible implementation, when sending the response to the first authentication and authorization request to the SMF, the communication unit 1601 is specifically configured to: determine, based on the second subscription data, that the first identifier is allowed to access a network through the terminal device, and send the response to the first authentication and authorization request to the SMF.

In a possible implementation, when determining, based on the second subscription data, that the first identifier is allowed to access the network through the terminal device, the processing unit 1602 is specifically configured to: when a fourth identifier of the terminal device matches the third identifier that is of the bound terminal device and that is included in the second subscription data, allow the first identifier to access the network through the terminal device.

In a possible implementation, the fifth message further includes first success indication information, and the first success indication information indicates that the first identifier is allowed to access the network.

In an implementation, when the communication apparatus 1600 may be a second AMF, may be an apparatus in a second AMF, or may be an apparatus that can be used together with a second AMF,
the communication unit 1601 is configured to receive a fourth registration request message from a server, where the fourth registration request message includes a first identifier;
the processing unit 1602 is configured to: obtain, from a UDM, second subscription data corresponding to the first identifier, where the second subscription data includes location information of a terminal device; or obtain, from a PCF, policy subscription data corresponding to the first identifier, where the policy subscription data includes location information of a terminal device;
the processing unit 1602 is further configured to create second context information corresponding to the first identifier; and
the processing unit 1602 is further configured to store the location information in the second context information.

FIG. 17 is a diagram of a structure of another communication apparatus. The communication apparatus 1700 may be the SMF, the server, the first AMF, the second AMF, the UDM, or the PCF in the foregoing method embodiments, or may be a chip, a chip system, a processor, or the like that supports the SMF, the server, the first AMF, the second AMF, the UDM, or the PCF in implementing the foregoing method. The communication apparatus may be configured to implement the method described in the foregoing method embodiments. For details, refer to the descriptions in the foregoing method embodiments.

The communication apparatus 1700 may include one or more processors 1701. The processor 1701 may be a general-purpose processor, a dedicated processor, or the like. For example, the processor 1701 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus 1700 may include one or more memories 1702. The one or more memories 1702 may store instructions 1704. The instructions may be run on the processor 1701, to enable the communication apparatus 1700 to perform the method described in the foregoing method embodiments. Optionally, the memory 1702 may further store data. The processor 1701 and the memory 1702 may be separately disposed, or may be integrated together.

Optionally, the communication apparatus 1700 may further include a transceiver 1705 and an antenna 1706. The transceiver 1705 may be referred to as a transceiver unit, a transceiver machine, a transceiver circuit, or the like, and is configured to implement a transceiver function. The transceiver 1705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. The processing unit 1602 shown in FIG. 16 may be the processor 1701. The communication unit 1601 may be the transceiver 1705.

In another possible design, the processor 1701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1701 may store instructions 1703, and the instructions 1703 are run on the processor 1701, so that the communication apparatus 1700 performs the method described in the foregoing method embodiments. The instructions 1703 may be fixed in the processor 1701. In this case, the processor 1701 may be implemented by using hardware.

In still another possible design, the communication apparatus 1700 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be an SMF, a server, a first AMF, a second AMF, a UDM, or a PCF. However, a scope of the communication apparatus described in embodiments of this application is not limited thereto, and a structure of the communication apparatus may not be limited by FIG. 17. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, or an artificial intelligence device; or
(6) others.

For a case in which the communication apparatus may be a chip or a chip system, refer to a diagram of a structure of a chip shown in FIG. 18. The chip 1800 shown in FIG. 18 includes a processor 1801 and an interface 1802. Optionally, the chip may further include a memory 1803. There may be one or more processors 1801, and there may be a plurality of interfaces 1802.

For a case in which the chip is configured to implement the SMF, the server, the first AMF, the second AMF, the UDM, or the PCF in embodiments of this application:
the interface 1802 is configured to receive or output a signal; and
the processor 1801 is configured to perform a data processing operation of the SMF, the server, the first AMF, the second AMF, the UDM, or the PCF.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the communication apparatus provided in embodiments of this application may also correspondingly implement the features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another appropriate type.

This application further provides a computer-readable medium. The storage medium stores a computer program or instructions. When the computer program or the instructions are executed by a communication apparatus, a function in any one of the foregoing method embodiments is implemented.

This application further provides a computer program product including instructions. When a computer reads and executes the computer program product, the computer is enabled to implement a function in any one of the foregoing method embodiments.

This application provides a communication system. The communication system includes an access network device and a first network element. The access network device is configured to perform the method performed by the access network device in the foregoing embodiments, and the first network element is configured to perform the method performed by the first network element in the foregoing embodiments. Optionally, the communication system further includes a terminal device.

This application provides a communication system. The communication system includes an SMF, a server, and a first AMF. The SMF is configured to perform the method performed by the SMF in the foregoing embodiments. The server is configured to perform the method performed by the server in the foregoing embodiments. The first AMF is configured to perform the method performed by the first AMF in the foregoing embodiments.

This application provides a communication system. The communication system includes an SMF, a server, a first AMF, and a second AMF. The SMF is configured to perform the method performed by the SMF in the foregoing embodiments. The server is configured to perform the method performed by the server in the foregoing embodiments. The second AMF is configured to perform the method performed by the second AMF in the foregoing embodiments. The first AMF is configured to perform the method performed by the first AMF in the foregoing embodiments.

This application provides a communication system. The communication system includes an SMF, a server, and a first AMF. The SMF is configured to perform the method performed by the SMF in the foregoing embodiments. The server is configured to perform the method performed by the server in the foregoing embodiments. The first AMF is configured to perform the method performed by the first AMF in the foregoing embodiments.

This application provides a communication system. The communication system includes an SMF, a server, a second AMF, and a UDM. The SMF is configured to perform the method performed by the SMF in the foregoing embodiments. The UDM is configured to perform the method performed by the UDM in the foregoing embodiments. The server is configured to perform the method performed by the server in the foregoing embodiments. The second AMF is configured to perform the method performed by the second AMF in the foregoing embodiments. The second AMF may be the same as or different from a first AMF.

This application provides a communication system. The communication system includes an SMF, a server, a second AMF, and a PCF. The SMF is configured to perform the method performed by the SMF in the foregoing embodiments. The PCF is configured to perform the method performed by the PCF in the foregoing embodiments. The server is configured to perform the method performed by the server in the foregoing embodiments. The second AMF is configured to perform the method performed by the second AMF in the foregoing embodiments. The second AMF may be the same as or different from a first AMF.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining first subscription data of a terminal device and a first identifier; and
determining, based on the first subscription data, that the first identifier is allowed to access a network, and sending a first message to a server, wherein the first message comprises an identifier of a first access and mobility management function AMF and/or a temporary identifier of the terminal device.

2. The method according to claim 1, wherein the first subscription data comprises a bound second identifier, and the determining, based on the first subscription data, that the first identifier is allowed to access the network comprises:
when the first identifier matches the bound second identifier comprised in the first subscription data, allowing the first identifier to access the network.

3. The method according to claim 1 or 2, wherein the second identifier comprises at least one user identifier whose access is allowed or first indication information, and the first indication information indicates that any user identifier is allowed to access the network through the terminal device; and
the first identifier comprises a first user identifier; and before the determining, based on the first subscription data, that the first identifier is allowed to access the network, the method further comprises:
when the first user identifier matches the at least one user identifier comprised in the first subscription data, allowing the first user identifier to access the network; or
when the first subscription data comprises the first indication information, allowing the first user identifier to access the network.

4. The method according to any one of claims 1 to 3, wherein the first identifier comprises a first user identifier; and the obtaining the first identifier comprises:
receiving an uplink protocol data unit PDU session establishment request message from the terminal device, wherein the uplink PDU session establishment request message comprises a first user identifier; or
receiving a session request message from a first AMF, wherein the session request message comprises a first user identifier.

5. The method according to any one of claims 1 to 4, wherein before the determining, based on the first subscription data, that the first identifier is allowed to access the network, the method further comprises:
sending a first authentication and authorization request message to the server, wherein the first authentication and authorization request message comprises a first identifier and/or a fourth identifier of the terminal device; and
receiving a response to the first authentication and authorization request from the server, wherein the response to the first authentication and authorization request comprises a first identifier.

6. The method according to any one of claims 1 to 5, wherein the first message further comprises first success indication information, and the first success indication information indicates that the first identifier is allowed to access the network.

7. A communication method, wherein the method comprises:
receiving a first message from a session management function SMF, wherein the first message comprises an identifier of a first access and mobility management function AMF and/or a temporary identifier of a terminal device; and
sending a first registration request message to a second AMF, wherein the first registration request message comprises a first identifier and/or the temporary identifier.

8. The method according to claim 7, wherein the second AMF is the same as the first AMF, or the second AMF is different from the first AMF.

9. The method according to claim 7 or 8, wherein before the receiving a first message from the SMF, the method further comprises:
receiving a first authentication and authorization request message from a SMF, wherein the first authentication and authorization request message comprises a first identifier and/or a fourth identifier of the terminal device;
determining second subscription data corresponding to the first identifier, wherein the second subscription data comprises a third identifier of the terminal device; and
when authentication and authorization on the first identifier succeeds, sending a response to the first authentication and authorization request to the SMF, wherein the response to the first authentication and authorization request comprises the first identifier.

10. The method according to claim 9, wherein the sending the response to the first authentication and authorization request to the SMF comprises:
determining, based on the second subscription data, that the first identifier is allowed to access a network through the terminal device, and sending a response to the first authentication and authorization request to the SMF.

11. The method according to claim 10, wherein the determining, based on the second subscription data, that the first identifier is allowed to access the network through the terminal device comprises:
when the fourth identifier of the terminal device matches the third identifier of the terminal device comprised in the second subscription data, allowing the first identifier to access the network through the terminal device.

12. The method according to any one of claims 7 to 11, wherein the first message further comprises first success indication information, and the first success indication information indicates that the first identifier is allowed to access the network.

13. A communication method, wherein the method comprises:
receiving a first registration request message from a server, wherein the first registration request message comprises a first identifier and/or a temporary identifier of a terminal device;
determining, based on the temporary identifier or a third identifier of the terminal device, first context information corresponding to the terminal device; and
obtaining location information of the terminal device from the first context information.

14. The method according to claim 13, wherein the method further comprises:
creating second context information corresponding to the first identifier; and
storing the location information in the second context information.

15. The method according to claim 13 or 14, wherein the first registration request message comprises the first identifier; and before the determining, based on the temporary identifier or the third identifier of the terminal device, the first context information corresponding to the terminal device, the method further comprises:
obtaining second subscription data corresponding to the first identifier, wherein the second subscription data comprises the third identifier of the terminal device and/or the temporary identifier.

16. A communication method, wherein the method comprises:
receiving a first registration request message from a server, wherein the first registration request message comprises a first identifier and/or a temporary identifier of a terminal device;
determining an identifier of a first access and mobility management function AMF based on the temporary identifier, the first identifier, or a third identifier of the terminal device;
sending a second message to the first AMF, wherein the second message is used to request location information of the terminal device, and the second message comprises at least one of the following information: the temporary identifier or the third identifier; and
receiving, from the first AMF, a response message corresponding to the second message, wherein the response message corresponding to the second message comprises the location information.

17. The method according to claim 16, wherein the method further comprises:
creating second context information corresponding to the first identifier; and
storing the location information in the second context information.

18. The method according to claim 16 or 17, wherein the first registration request message comprises the first identifier; and before the determining the identifier of the first AMF based on the temporary identifier, the first identifier, or the third identifier of the terminal device, the method further comprises:
obtaining second subscription data corresponding to the first identifier, wherein the second subscription data comprises the third identifier of the terminal device and/or the temporary identifier.

19. The method according to any one of claims 16 to 18, wherein the determining the identifier of the first AMF based on the third identifier of the terminal device comprises:
obtaining information that is about the first AMF and that is comprised in subscription data corresponding to the third identifier of the terminal device, wherein the information about the first AMF comprises the identifier of the first AMF.

20. The method according to any one of claims 16 to 18, wherein the first registration request message comprises the first identifier, and the determining the identifier of the first AMF based on the first identifier comprises:
obtaining the second subscription data corresponding to the first identifier, wherein the second subscription data comprises information about the first AMF, and the information about the first AMF comprises the identifier of the first AMF.

21. A communication method, wherein the method comprises:
receiving a second message from a second access and mobility management function AMF, wherein the second message is used to request location information of a terminal device, and the second message comprises at least one of the following information: a temporary identifier of the terminal device or a third identifier of the terminal device;
determining, based on the temporary identifier or the third identifier, first context information corresponding to the terminal device;
obtaining the location information from the first context information; and
sending, to the second AMF, a response message corresponding to the second message, wherein the response message corresponding to the second message comprises the location information.

22. A communication system, comprising an SMF, a server, and a first AMF, wherein the SMF is configured to perform the method according to any one of claims 1 to 6, the server is configured to perform the method according to any one of claims 7 to 12, and the first AMF is configured to perform the method according to any one of claims 13 to 15.

23. A communication system, comprising an SMF, a server, a first AMF, and a second AMF, wherein the SMF is configured to perform the method according to any one of claims 1 to 6, the server is configured to perform the method according to any one of claims 7 to 12, the second AMF is configured to perform the method according to any one of claims 16 to 20, and the first AMF is configured to perform the method according to claim 21.

24. A communication apparatus, comprising a function or unit for performing the method according to any one of claims 1 to 6, a function or unit for performing the method according to any one of claims 7 to 12, a function or unit for performing the method according to any one of claims 13 to 15, a function or unit for performing the method according to any one of claims 16 to 20, or a function or unit for performing the method according to claim 21.

25. A communication apparatus, comprising a processor and a memory, wherein the processor is coupled to the memory, and the processor is configured to implement the method according to any one of claims 1 to 6, the processor is configured to implement the method according to any one of claims 7 to 12, the processor is configured to implement the method according to any one of claims 13 to 15, the processor is configured to implement the method according to any one of claims 16 to 20, or the processor is configured to implement the method according to claim 21.

26. A communication apparatus, comprising a processor and an interface circuit, wherein the interface circuit is configured to receive a signal from another communication apparatus different from the communication apparatus and transmit the signal to the processor, or send a signal from the processor to another communication apparatus different from the communication apparatus, and the processor is configured to implement the method according to any one of claims 1 to 6 through a logic circuit or by executing code instructions, the processor is configured to implement the method according to any one of claims 7 to 12 through a logic circuit or by executing code instructions, the processor is configured to implement the method according to any one of claims 13 to 15 through a logic circuit or by executing code instructions, the processor is configured to implement the method according to any one of claims 16 to 20 through a logic circuit or by executing code instructions, or the processor is configured to implement the method according to claim 21 through a logic circuit or by executing code instructions.

27. A computer-readable storage medium, wherein the storage medium stores a computer program or instructions; and when the computer program or the instructions are executed by a communication apparatus, the method according to any one of claims 1 to 6 is implemented, the method according to any one of claims 7 to 12 is implemented, the method according to any one of claims 13 to 15 is implemented, the method according to any one of claims 16 to 20 is implemented, or the method according to claim 21 is implemented.

28. A computer program product, wherein when a computer reads and executes the computer program product, the computer is caused to perform the method according to any one of claims 1 to 6, the computer is caused to perform the method according to any one of claims 7 to 12, the computer is caused to perform the method according to any one of claims 13 to 15, the computer is caused to perform the method according to any one of claims 16 to 20, or the computer is caused to perform the method according to claim 21.
